# EUROPEAN PATENT APPLICATION

(11) **EP 4 572 482 A1**
(43) Date of publication of application: **18.06.2025**
(21) Application number: 23852212.2
(22) Date of filing: 25.05.2023
(51) Int. Cl.: H04W 72/0453, H04W 16/14, H04W 92/18

(54) **COMMUNICATION DEVICE AND COMMUNICATION METHOD**

(30) Priority: 10.08.2022 JP 2022128348
(71) Applicant: Panasonic Intellectual Property Corporation of America, Torrance, CA 90504 (US)
(72) Inventor: HORIUCHI, Ayako, Kadoma-shi, Osaka 571-0057 (JP); SUZUKI, Hidetoshi, Kadoma-shi, Osaka 571-0057 (JP); KANG, Yang, Singapore 469332 (SG)
(74) Representative: Grünecker Patent- und Rechtsanwälte PartG mbB
(86) International application number: PCT/JP2023/019504
(87) International publication number: WO 2024/034228

(57) **Abstract**

This communication device comprises: a control circuit that allocates a signal to a resource allocation unit constituted by an interlace of consecutive numbers in a terminal communication in an unlicensed band; and a transmission circuit that transmits the signal.

## Description

### Technical Field

The present disclosure relates to a communication apparatus and a communication method.

### Background Art

Enhancement of a communication system called the 5th Generation mobile communication system (5G) has been studied. In 5G, it has been discussed to flexibly provide functions for each of use cases that require an increase in communication traffic, an increase in the number of terminals to be connected, high reliability, and low latency.

### Citation List

### Non-Patent Literature

NPL 1
   3GPP, TR 38.885 V16.0.0, "Study on NR Vehicle-to-Everything (V2X)"
NPL 2
   RP-201385, "WID revision: NR sidelink enhancement," LG Electronics, June 29 - July 3, 2020
NPL 3
   RP-213678, "New WID on NR sidelink evolution," OPPO, LG Electronics, Dec. 6 - 17, 2021
NPL 4
   3GPP, TS 38.331 V17.1.0, "NR; Radio Resource Control (RRC) protocol specification (Release 17)"

### Summary of Invention

There is room for consideration, however, with respect to the effective utilization of communication resources in an unlicensed band.

One non-limiting and exemplary embodiment of the present disclosure facilitates providing a communication apparatus and a communication method each capable of improving the resource utilization efficiency of communication in an unlicensed band.

A communication apparatus according to an exemplary embodiment of the present disclosure includes: control circuitry, which, in operation, assigns, in terminal-to-terminal (inter-terminal) communication in a license-exempt band (an unlicensed band), a signal in a resource allocation unit configured with interlaces with consecutive numbers; and transmission circuitry, which, in operation, transmits the signal.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve the resource utilization efficiency of communication in an unlicensed band.

Additional benefits and advantages of the disclosed aspects will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an example of channel mapping in a slot;
FIG. 2 illustrates an example of channel mapping in a slot at the time of channel busy;
FIG. 3 illustrates an example of regulations on the frequency of signals in an unlicensed band;
FIG. 4 illustrates an example of interlace allocation;
FIG. 5 is a block diagram illustrating an exemplary configuration of a part of a base station;
FIG. 6 is a block diagram illustrating an exemplary configuration of a part of a terminal;
FIG. 7 illustrates an example of mapping of physical sidelink control channels (PSCCHs);
FIG. 8 illustrates another example of mapping of PSCCHs;
FIG. 9 illustrates still another example of mapping of PSCCHs;
FIG. 10 illustrates an example of mapping of Virtual Resource Blocks (VRBs) and Physical Resource Blocks (PRBs);
FIG. 11 is a block diagram illustrating an exemplary configuration of the terminal;
FIG. 12 illustrates another example of channel mapping in a slot;
FIG. 13 illustrates still another example of channel mapping in a slot;
FIG. 14 illustrates still another example of channel mapping in a slot;
FIG. 15 illustrates still another example of channel mapping in a slot;
FIG. 16 illustrates a configuration example of parameter for a physical sidelink feedback channel (PSFCH);
FIG. 17 illustrates yet another example of channel mapping in a slot;
FIG. 18 illustrates an exemplary architecture for a 3GPP NR system;
FIG. 19 is a schematic diagram illustrating a functional split between NG-RAN and 5GC;
FIG. 20 is a sequence diagram of a radio resource control (RRC) connection setup/reconfiguration procedure;
FIG. 21 is a schematic diagram illustrating usage scenarios of enhanced Mobile BroadBand (eMBB), massive Machine Type Communications (mMTC), and Ultra Reliable and Low Latency Communications (URLLC); and
FIG. 22 is a block diagram illustrating an exemplary 5G system architecture for a non-roaming scenario.

### Description of Embodiments

Hereinafter, embodiments of the present disclosure will be described in detail with reference to the drawings.

In the 3rd Generation Partnership Project (3GPP), which is an international standards-developing organization, has been studying development of a communication systems in terms of both the development of the Long Term Evolution (LTE) system and New Radio (NR). In 3GPP, it has been first considered to support vehicle to X (V2X) in the LTE system. It is also considered to support V2X in NR in which a band broader than in LTE is available (see, for example, NPL 1).

In addition to V2X, further enhancement of communication using sidelink (SL) have been studied (see, for example, NPL 2). V2X assumes Vehicle to Vehicle (V2V), Vehicle to Infrastructure (V2I), Vehicle to Pedestrian (V2P), and Vehicle to Network (V2N) communication.

In the V2V, V2I, and V2P, terminals can directly transmit and receive signals to and from each other using a link called sidelink or PC5 without through a network with a base station (for example, network through base station). V2N assumes communication through a link called Uu between a base station and a terminal. Note that the base station may be referred to as gNB in NR or as eNB in LTE. Meanwhile, the terminal may be referred to as User Equipment (UE).

Further, utilization of sidelink communication in an unlicensed band (license-exempt band) has also been studied (see, for example, NPL 3).

### [NR Sidelink]

In NR sidelink, unicast, groupcast, and broadcast are supported in transmission and reception. In unicast, one-to-one transmission from a transmission terminal (also referred to as Tx UE, source UE, or transmission source terminal) to a reception terminal (also referred to as Rx UE, destination UE, or destination terminal) is assumed. In groupcast, transmission from a transmission terminal to one or more reception terminals included in a certain group is assumed. In broadcast, transmission from a transmission terminal without identifying a reception terminal is assumed.

In NR sidelink, a control signal called sidelink control information (SCI) is transmitted and received. The SCI is divided into the 1st-stage SCI and the 2nd-stage SCI. The 1st-stage SCI is mapped to the physical SL control channel (PSCCH). The 2nd-stage SCI is mapped to at least a part of the physical SL shared channel (PSSCH) through which data is transmitted and received. By dividing the SCI into two, the number of bits and the size of the 1st-stage SCI can be reduced. In sidelink, there is a function in which a particular terminal (for example, terminal A) receives PSCCH transmitted from another terminal different from terminal A, and after grasping the usage situation of the resource of the other terminal, determines the resource to be used for transmission by terminal A. This function is also called "sensing."

Note that, in sidelink, signals are transmitted and received through the following channels.
- Physical SL control channel (PSCCH): 1st-stage SCI (sidelink control information) is mapped to PSCCH.
- Physical SL shared channel (PSSCH): a data signal and 2nd-stage SCI are mapped to PSSCH.
- Physical SL feedback channel (PSFCH): a feedback signal for PSSCH is mapped to PSFCH. The feedback signal indicates, for example, an acknowledgement (ACK) indicating that reception of PSSCH is successful, or a negative acknowledgement (NACK) indicating that the reception of PSSCH is not successful. The feedback signal is applicable in a case where PSSCH is transmitted by unicast or groupcast. Further, in Release 17 (Rel. 17) and thereafter, as Inter-UE coordination, PSFCH may be transmitted in a case where a collision is detected.
- Physical SL broadcast channel (PSBCH): a broadcast signal is mapped to PSBCH. PSBCH is transmitted together with a signal for synchronization. The signal for synchronization is, for example, a sidelink Primary synchronization signal (S-PSS) and/or a sidelink Secondary synchronization signal (S-SSS). PSBCH to be transmitted together with a signal for synchronization is also referred to as a sidelink synchronization signal block (S-SSB).

Note that, the signal to be transmitted or received in sidelink may be referred to as a "sidelink signal." Further, for example, "transmission of information (or a signal) mapped to PSCCH" may be abbreviated to "PSCCH transmission". Further, in the following description, PSCCH may refer to a resource defined as PSCCH or information (or a signal) mapped to a resource defined as PSCCH. Even in channels other than PSCCH, abbreviations may be made in the same manner as PSCCH.

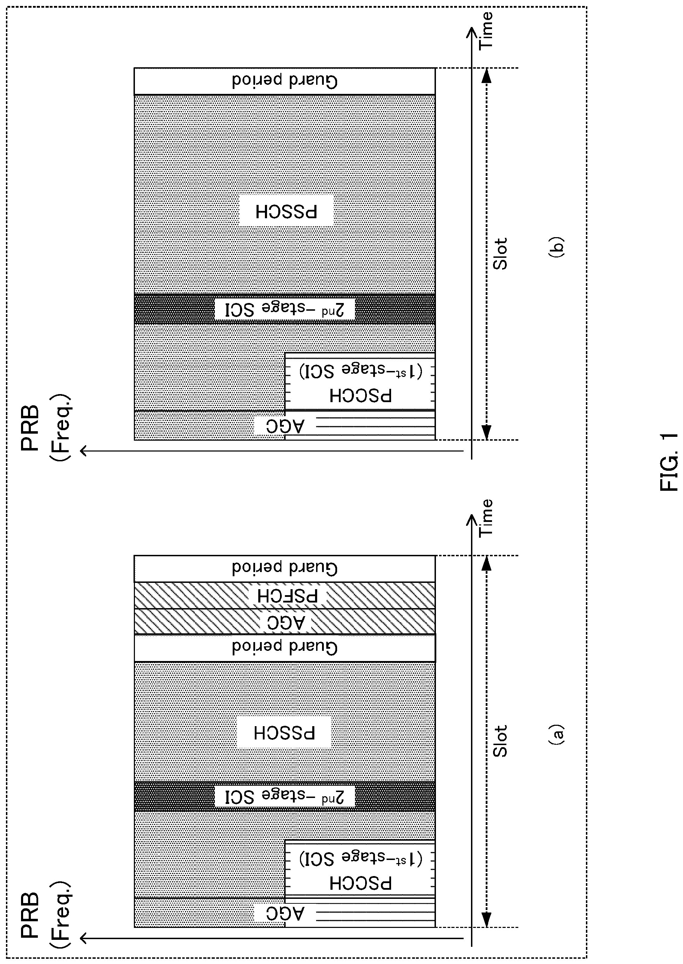

FIG. 1 illustrates exemplary mapping of PSCCH, PSSCH, and PSFCH in a slot. The horizontal axis in FIG. 1 represents the time axis, and the vertical axis represents the frequency axis in PRB (physical resource block) units. FIG. 1 illustrates two examples of (a) and (b).

Note that, as illustrated in (a) of FIG. 1, PSFCH may be mapped. Alternatively, as illustrated in (b) of FIG. 1, PSFCH may not be mapped due to a configuration. In a case where PSFCH is not mapped, the area of PSSCH may be increased.

The number of symbols of the sidelink signal in the slot may be variable depending on a configuration. Further, the mapping of the 2nd-stage SCI is changed due to mapping of a demodulation reference signal (DMRS) of PSSCH, which is not illustrated. The 1st-stage SCI is mapped starting from the lowest frequency resource among frequency resources to which PSSCH is assigned. For auto gain control (AGC), copies of the starting symbols of PSCCH and PSSCH are mapped to the symbols before the starting symbols of PSCCH and PSSCH. Further, as illustrated in (a) of FIG. 1, a copy of PSFCH is also mapped before the symbol of PSFCH for AGC.

Further, in (a) of FIG. 1, a guard interval (may also be referred to as guard period or gap) for switching between transmission and reception is mapped in the interval between PSSCH and PSFCH and in the interval after the last symbol of PSFCH. In (b) of FIG. 1, a guard period for switching between transmission and reception is mapped in the interval after the last symbol of PSSCH. The guard period may correspond to an interval in which no signal is transmitted or received.

The sidelink communication in NR includes two modes that are referred to as Mode 1 and Mode 2. In Mode 1, the base station determines (schedules) a resource to be used by the terminal for sidelink and thus indicates a scheduling result to the terminal. In Mode 2, the terminal determines (or selects) a resource to be used for sidelink from resources in a resource pool configured in advance. Mode 1 represents a state in which the base station and the terminal are connected with each other, and is assumed to be used in an environment in which the terminal performing sidelink communication can receive an indication from the base station. In Mode 2, the terminal can perform transmission in sidelink without an indication from the base station, and thus, sidelink communication can be performed with terminal under a different operator and/or a terminal existing outside the coverage of the base station.

A resource used for sidelink is configured by, for example, a sidelink band width part (SL BWP) and a resource pool.

SL BWP specifies a frequency band that can be used for sidelink and is configured separately from a downlink Band width part (DL BWP) and an uplink Band width part (UL BWP) configured between a base station and a terminal (Uu). For example, the frequency band of the SL BWP may overlap with the UL BWP.

The resource pool is resources within the SL BWP, and resources in the frequency direction and time direction are specified by the resource pool. For example, a plurality of resource pools may be configured for one terminal. Frequency resources in a resource pool can be divided into units called subchannels, and resource allocation can be configured in subchannel units. The subchannel includes a plurality of physical resource blocks (PRBs), and PSSCH can be allocated in units of subchannels, which are groups of a plurality of PRBs.

### [NR-Unlicensed (NR-U)]

With enhanced communication capacity, the utilization of an unlicensed band in addition to a licensed band has also been studied in the 3GPP. NR that utilizes an unlicensed band is also referred to as NR-U (unlicensed). In NR-U, operations to ensure fairness in coexistence with other apparatuses, such as LAA (Licensed Assisted Access) based on Wifi (registered trademark) and/or LTE, are added and enhanced.

In the unlicensed band, a communication apparatus (for example, the base station or the terminal in NR-U) performs Listen Before Talk (LBT) in order to ensure fairness with other apparatuses, and starts transmission after confirming that another apparatus is not transmitting a signal nearby. The term LBT may be replaced with other terms such as carrier sense or sensing. The communication apparatus performs the LBT and confirms that another apparatus is not transmitting a signal nearby, and then a channel occupancy time (COT), which is the time of a channel occupancy, is configured for the communication apparatus. In the COT, the communication apparatus can transmit and receive signals in DL (downlink) resources and UL (uplink) resources.

There are two operation methods for the LBT. The first operation method is load based equipment (LBE). In LBE, when a communication apparatus acquires the COT, the communication apparatus performs Type 1 channel access (also referred to as category 4 LBT or Type 1 LBT). Further, in a portion other than the beginning of the COT, the communication apparatus can perform Type 2 channel access (also referred to as Type 2 LBT) and can start transmission after the performance.

Note that, in the following description, the communication apparatus (for example, the base station or the terminal) "starts transmission after performing the LBT" corresponds to the communication apparatus starting transmission after confirming that the LBT has been performed and that no other apparatus is transmitting a signal nearby.

Table 1 illustrates examples of the sensing interval of LBT for downlink transmission right acquisition in DL and the applicable interval in LBE.

**[Table 1]**

| | Sensing interval | Applicable gap duration | |
|---|---|---|---|
| Type 1 (cat 4 LBT) | Determined by random backoff value | - | In a case where gNB (base station) or UE (terminal) acquires COT |
| | Extended when acquisition of the transmission right is unsuccessful | | |
| Type 2A (cat 2 LBT) | 25 µs | - | Transmission of Discovery Reference Signal (DRS) |
| | | 25 µs | Transmission in COT |
| Type 2B (cat 2 LBT) | 16 µs | 16 µs | Transmission in COT |
| Type 2C (cat 1 LBT) | (Not sense) | < 16 us for LBE | Transmission in COT |

In Type 2A, when the interval between two temporally continuous resources is 25 µs, the terminal performs LBT within 25 µs. In a case where the terminal does not confirm transmission from another apparatus in the LBT, the terminal can start transmission.

In Type 2B, when the interval between two temporally continuous resources is 16 µs, the terminal performs the LBT in 16 µs. In a case where the terminal does not confirm transmission from another apparatus, the terminal can start transmission.

In Type 2C, in a case where the interval between two temporally continuous resources is less than 16 microseconds, the terminal can start transmission without the LBT. Note that, exceptionally, in the case of DRS (Discovery Reference Signal) transmission, due to the short transmission time for the DRS, Type 2A LBT instead of Type 1 LBT is performed, and the transmission can be started.

A second operation method is frame based equipment (FBE). The FBE is an operation in which it is assumed that other equipment such as Wifi is not installed in the same space, the frame period is fixed, and the LBT is performed at the beginning of the frame to acquire the COT. In the FBE, the COT can be acquired only from the beginning of the fixed frame period. Further, the FBE is defined to include an idle period of 5% or more for each fixed frame period.

NR-U has been described, thus far.

In each of the following embodiments, an example in which sidelink communication is performed in an unlicensed band will be described. The sidelink communication using the unlicensed band may also be referred to as Sidelink unlicensed (SL-U).

In the unlicensed band, a terminal performs LBT and starts transmission when no transmission from another apparatus is confirmed. On the other hand, in the unlicensed band, the terminal performs LBT and detects a signal of another apparatus, and does not start the transmission when the transmission from another apparatus is confirmed. A case where a signal of another apparatus is detected is also referred to as "busy (or channel busy)," "unavailable," or "LBT failure."

In the case of the LBT failure, the terminal cannot acquire the transmission right of the allocated resource or the selected resource and thus cannot start the transmission, even in sidelink.

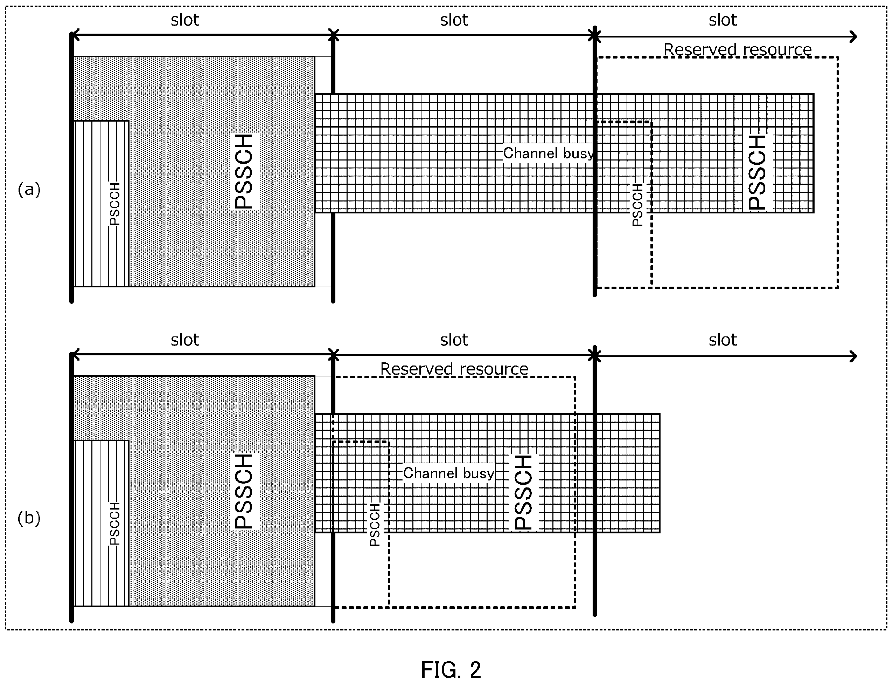

FIG. 2 illustrates an example of channel mapping in each slot in the case of the LBT failure.

For example, FIG. 2 illustrates, in (a), an example of a case where another apparatus starts transmission in a slot located before the slot in which the terminal is scheduled to transmit (slot in which resource is reserved). Further, FIG.2 illustrates, in (b), an example of a case where another apparatus starts transmission in a symbol immediately before the slot in which the terminal is scheduled to transmit. As illustrated in (a) and (b) of FIG. 2, the terminal performs LBT prior to the slot in which the terminal is scheduled to transmit, which results in the LBT failure, so that transmission of a sidelink signal cannot be started. For example, as illustrated in (b) of FIG. 2, even when the terminal uses consecutive slots and attempts to transmit within a COT by performing LBT Type 2, the transmission right may be acquired by another apparatus.

Further, in the unlicensed band, there is a regulation in ETSI (ETSI EN 301 893 V2.1.1 (2017-05)) that an Occupied Channel Bandwidth (OCB) occupies 80% to 100% of Nominal Channel Bandwidth (NCB). The regulation that OCB occupies 80% or more of NCB is referred to as an OCB regulation below. When the OCB regulation is satisfied, signals in the unlicensed band are transmitted using a frequency of 80% or more of the frequency band of NCB.

Note that, in the following, the OCB regulation is the regulation that OCB occupies 80% or more of NCB, but the present disclosure is not limited to this. The OCB regulation that OCB occupies 80% or more of NCB is an example of limitation on the bandwidth with respect to a frequency band.

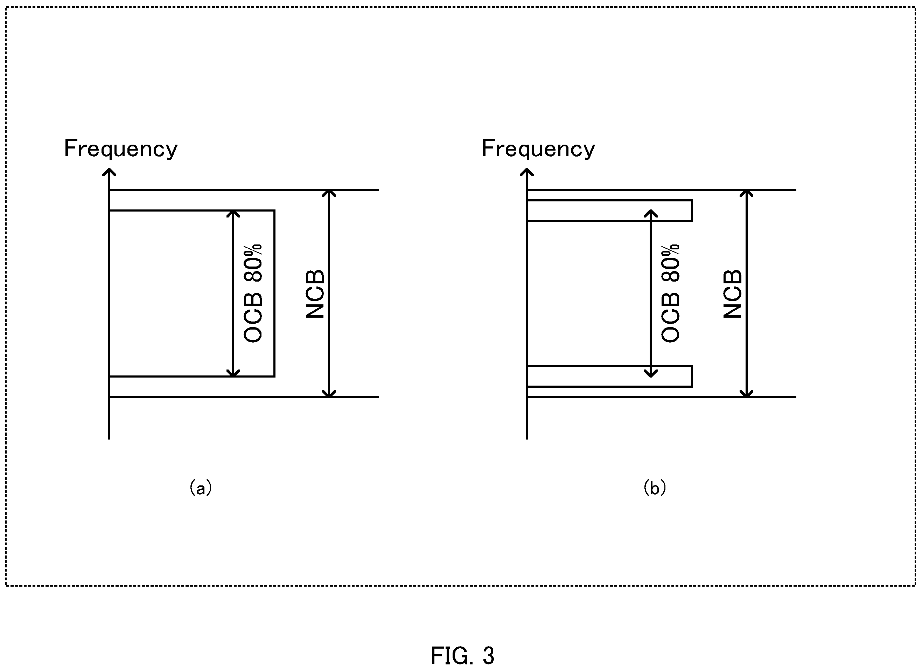

FIG. 3 illustrates an example of regulations on the frequency of signals in the unlicensed band. In FIG. 3, "OCB 80%" indicates that OCB is equal to or greater than 80% of the frequency band of NCB. Note that, in the drawings described below, "OCB 80%" indicates that OCB is equal to or greater than 80% of the frequency band of NCB.

The signals in the unlicensed band may be transmitted using 80% or more of the frequency band of NCB continuously as illustrated in (a) of FIG. 3, or may be mapped such that the width of both ends on the frequency axis of the plurality of divided resources becomes 80% or more of the frequency band of NCB, as illustrated in (b) of FIG. 3.

In NR-U and LAA, interlace allocation is introduced to satisfy the OCB regulation in this frequency domain. In the NR-U interlaced allocation, NCB is configured for a Resource Block set (RB set) of 20 MHz. The configuration of NCB is not limited to 20 MHz.

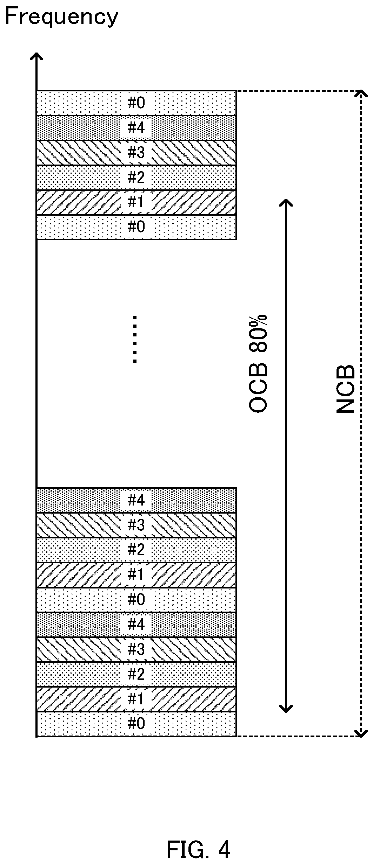

Table 2 illustrates an example of the relationship between subcarrier spacing (SCS) and interlace. FIG. 4 illustrates an example of interlace allocation. The letter M in Table 3 indicates the number of interlaces, and the letter N indicates the number of PRBs. FIG. 4 illustrates the interlace allocation in the case where SCS is 30 kHz. In the NR-U interlace allocation, as illustrated in Table 2 and FIG. 4, for example, when the SCS is 30 kHz, a 20-MHz band is divided into five interlaces (interlaces #0 to #4), and one interlace is composed of 10 or 11 PRBs (N PRBs).

**[Table 2]**

| SCS | M | N PRBs |
|---|---|---|
| 15 kHz | 10 | 10 or 11 |
| 30 kHz | 5 | 10 or 11 |

It is assumed that the interlace allocation is applied to also the sidelink communication in the unlicensed band. In the sidelink communication in the unlicensed band, there is scope for further study on a configuration method of a subchannel and interlace mapping that are the units to allocate PSSCH.

In a non-limiting and exemplary embodiment of the present disclosure, a description will be given of a configuration method of a subchannel and interlace mapping in sidelink communication in an unlicensed band.

Note that, in each of the embodiments to be described later, sidelink communication is exemplified, but the present disclosure is not limited to the sidelink communication. Additionally, in each of the embodiments to be described later, an unlicensed band is exemplified, but the present disclosure is not limited to the unlicensed band.

### [Overview of Communication System]

A communication system according to an embodiment of the present disclosure includes base station 100 and terminal 200.

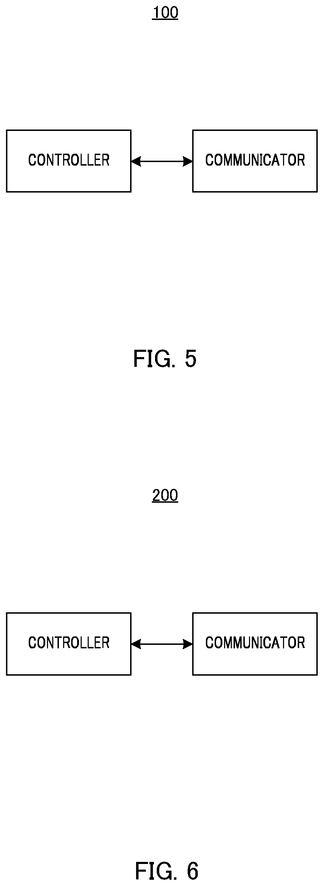

FIG. 5 is a block diagram illustrating an exemplary configuration of a part of base station 100. In base station 100 illustrated in FIG. 5, a controller controls communication via a link called Uu between terminal 200 and base station 100. A communicator transmits a signal via a link called Uu under the control of the controller. Further, the controller may perform control related to sidelink communication between a plurality of terminals (e.g., resource determination in Mode 1).

FIG. 6 is a block diagram illustrating an exemplary configuration of a part of terminal 200 (corresponding to, e.g., communication apparatus). In terminal 200 illustrated in FIG. 6, a controller (corresponding to, e.g., control circuitry) assigns, in terminal-to-terminal (inter-terminal) communication in a license-exempt band (unlicensed band), a signal in a resource allocation unit (e.g., subchannel) configured with interlaces with consecutive numbers, and a communicator (corresponding to, e.g., transmission circuitry) transmits the signal. Further, in terminal 200, a communicator (corresponding to, e.g., reception circuitry) receives, in terminal-to-terminal communication in a license-exempt band (unlicensed band), a signal assigned in a resource allocation unit (e.g., subchannel) configured with interlaces of consecutive numbers, and a controller (corresponding to, e.g., control circuitry) demodulates the signal. Note that, the transmission signal may be, for example, a sidelink signal, or may be a signal different from a sidelink signal.

### (Embodiment 1)

In the present embodiment, in sidelink communication in an unlicensed band, a subchannel, which is a resource allocation unit for PSSCH, is configured with interlaces with consecutive interlace numbers (e.g., neighboring interlaces in frequency domain).

For example, when a plurality of terminals perform transmission by Frequency Division Multiplexing (FDM), a possibility of leakage of radio waves from transmission of other terminals multiplexed within the band called In-band Emission (IBE). According to the present embodiment, a configuration of a subchannel using interlaces with consecutive interlace numbers allows PSSCH to be allocated to interlaces that are consecutive in the frequency domain among the plurality of interlaces. This makes it possible to reduce the contact points between resources allocated to terminal 200 and resources allocated to other terminals, thereby reducing the impact of IBE (or impact of interference from other terminals).

Hereinafter, operation examples according to the present embodiment will be each described.

### [Operation Example 1]

In Operation Example 1, interlaces (e.g., interlace numbers) that compose each subchannel are configured in the resource pool configuration.

Table 3 indicates a configuration example of interlaces that compose a subchannel. The configuration example of the subchannel in each of the cases where SCS is 15 kHz, 30 kHz, and 60 kHz is indicated in Table 3. Further, Table 3 indicates the configuration example of the subchannel in each of the cases where the number of subchannels per RB set (e.g., 20 MHz) is 1, 2, 3, 4, 5, and 10. Note that SCS and the number of subchannels are not limited to the examples indicated in Table 3.

For example, in cases where SCS = 15 kHz and 30 kHz, configuration may be made in the same manner as the interlace used in NR-U. For example, in the case where SCS = 15 kHz, 10 interlaces (e.g., interlaces #0 to #9) may be configured in an RB set, and in the case where SCS = 30 kHz, 5 interlaces (e.g., interlaces #0 to #4) may be configured in an RB set. For SCS = 60 kHz, there is no configuration in NR-U, but 3 interlaces (e.g., interlaces #0 to #2) may be configured in an RB set, for example.

For example, with respect to an RB set of 20 MHz, in a case where the number of subchannels is one (1 subchannel / 20 MHz), all interlaces in each SCS configure a single subchannel, for example.

In addition, for example, with respect to the RB set of 20 MHz, in a case where the number of subchannels is two (2 subchannels / 20MHz), for SCS = 15 kHz, ten interlaces are divided into two, and five interlaces consecutive in number (e.g., interlaces #0 to #4 and interlaces #5 to #9) configure a single subchannel. On the other hand, for SCS = 30 kHz, the number of interlaces cannot be evenly distributed (divided) to (into) subchannels, so that five interlaces may be divided into two groups with consecutive interlace numbers: one group composed of three interlaces (e.g., interlace #0 to #2); and the other group composed of two interlaces (e.g., interlace #3 and #4), and each group of the divided interlaces configures a single subchannel, for example. Similarly, for SCS = 60 kHz, three interlaces may be divided into two groups with consecutive interlace numbers: two interlaces (e.g., interlaces #0 and #1); and one interlace (e.g., interlace #2), and each group of the divided interlaces configures a single subchannel.

Similarly, for example, with respect to the RB set of 20 MHz, in a case where the number of subchannels is three (3 subchannels / 20 MHz), for SCS = 15 kHz, the number of interlaces cannot be evenly distributed (divided) to (into) subchannels, so that 10 interlaces may be divided into three groups with consecutive interlace numbers: four interlaces (e.g., interlaces #0 to #3); three interlaces (e.g., interlaces #4 to #6); and three interlaces (e.g., interlaces #7 to #9), and each group of the divided interlaces configures a single subchannel, for example. Similarly, for SCS = 30 kHz, the number of interlaces cannot be evenly distributed (divided) to (into) subchannels, so that five interlaces may be divided into three groups with consecutive interlace numbers: two interlaces (e.g., interlaces #0 and #1); two interlaces (e.g., interlaces #2 and #3); and one interlace (e.g., interlace #4), each of the five interlaces being contiguous, and each group of the divided interlaces configures a single subchannel. In addition, for SCS = 60 kHz, three interlaces are divided into three, and a single interlace configures a single subchannel.

In Table 3, similarly for a case where the number of subchannels included in the RB set of 20 MHz is another number (e.g., case of 4, 5 or 10), interlaces with consecutive interlace numbers are configured for each subchannel.

For example, assuming that the number of interlaces in an RB set is M and the number of subchannel set in a resource pools is C, the number of interlaces composing each subchannel is M/C when the interlaces can evenly be divided, or is floor (M/C) and +1 when the interlaces cannot evenly be divided. Where Floor () is a function (floor function) that truncates decimal points.

**[Table 3]**

| SCS | 1 subchann el /20MHz | 2 subchannel s /20MHz | | 3 subchannels /20MHz | | | 4 subchannels/20MHz | | | | 5 subchannels /20MHz | | | | | 10 subchannels /20MHz |
|---|---|---|---|---|---|---|---|---|---|---|---|---|---|---|---|---|
| 15kHz | 10 interlaces | 5 interlaces | | 4,3,3 interlaces | | | 3,3,3,2 interlaces | | | | 2 interlaces | | | | | 1 interlace |
| | #0-#9 | #0-#4 | #5-#9 | #0-#3 | #4-#6 | #7-#9 | #0-#2 | #3-#5 | #6, #7 | #8, #9 | #0, #1 | #2, #3 | #4, #5 | #6, #7 | #8, #9 | |
| 30kHz | 5 interlaces | 3,2 interlaces | | 2,2,1 interlaces | | | 2,1,1,1 interlaces | | | | 1 interlaces | | | | | |
| | #0-#4 | #0-#2 | #3, #4 | #0, #1 | #2, #3 | #4 | #0, #1 | #2 | #3 | #4 | #0 | #1 | #2 | #3 | #4 | |
| 60kHz (if supported ) | 3 interlaces | 2,1 interlaces | | 1 interlace | | | | | | | | | | | | |
| | #0-#2 | #0,#1 | #2 | #0 | #1 | #2 | | | | | | | | | | |

In such a manner, allowing the subchannel size (or the number of subchannels) to be variably configured in the resource pool makes it possible to configure the subchannel size appropriate for the use of each resource pool.

For example, in a case where a small data (e.g., data with amount less than threshold) such as indication of sensing information is transmitted more frequently, the subchannel size may be configured smaller, whereas when a large data (e.g., data with amount more than threshold) such as transmission of a high-capacity moving image is transmitted, the subchannel size may be configured larger.

Further, the number of subchannels corresponds to the number of times terminal 200 performing sidelink communication detects PSCCH in a single time. For example, the less the number of subchannels is, the number of times PSCCH is detected in terminal 200 (e.g., the number of times of blind decoding (BD)) can be reduced.

Further, as indicated in Table 3, the number of interlaces composing each of the plurality of subchannels included in an RB set may vary. For example, when the number of subchannels of 30 kHz is three, there are a case where the number of interlaces is two and a case where it is one, depending on subchannel. This enables the mapping of PSCCH / PSSCH even when the interlace number and the subchannel number are not in a multiple relationship.

### [Operation Example 2]

In the unlicensed band, it is assumed that an intra-cell guard band is configured every RB set of 20 MHz (e.g., at border of RB sets). Whether to configure the intra-cell guard band may be indicated to terminal 200 by higher layer signalling called (pre-) configured for each resource pool or for each terminal, or may be predetermined by configuration.

When the intra-cell guard band is configured, terminal 200 can start transmission in a 20-MHz bandwidth where no channel is used, even when the terminal confirms, with respect to a certain 20-MHz bandwidth, that no channel is used by LBT and confirms that a channel is used by LBT in an RB set 20-MHz bandwidth that is contiguous to the 20-MHz bandwidth.

For example, a case will be described where SL BWP is 100 MHz. When the intra-cell guard band is configured, for example, terminal 200 performs LBT every RB set of 20 MHz and then can start transmission on a channel confirmed to be unused through LBT. On the other hand, when the intra-cell guard band is not configured, terminal 200 can start transmission in a case where the terminal confirms that no channel is used through LBT in all RB sets in SL BWP.

For example, when the intra-cell guard band is configured, allocation of consecutive RB sets (or neighboring RB sets) to terminal 200 may enable terminal 200 to transmit PSSCH even in the PRB serving as the intra-cell guard band. For example, in a case where LBT is OK in two neighboring RB sets, terminal 200 may perform PSSCH transmission in the intra-cell guard band between the two RB sets.

Note that, in a case where terminal 200 uses consecutive RB sets to be allocated, whether to allocate PSSCH to the intra-cell guard band between the RB sets may be (re-) configured for each resource pool, or may be indicated by PSCCH.

Further, for example, terminal 200 specifies the number of RB sets to be allocated by a signal in PSCCH. Hence, it is unclear for terminal 200 whether there is allocation of neighboring RB sets prior to receiving PSCCH. Thus, for example, PSCCH need not be mapped in the intra-cell guard band.

Incidentally, there is also an inter-cell guard band, which is placed at an end of SL-BWP or a resource pool. PSCCH and PSSCH need not be mapped to the inter-cell guard band. Thus, it is possible to suppress the influence of out-of-band radiation to other cells.

### [Operation Example 3]

Operation Example 3 will describe an example of mapping (mapping example) of PSCCH and PSSCH in a case where an interlace mapping is configured for PSCCH and/or PSSCH (hereinafter also referred to as "PSCCH/PSSCH").

In a case where PSCCH is allocated to some of the plurality of PRBs composing a subchannel allocated to PSSCH, terminal 200 may allocate, in the same symbol, PSSCH to a PRB that is different from a PRB to which PSCCH is allocated, among the plurality of PRBs. At this time, in the plurality of PRBs composing the subchannel, transmission power per PRB may be configured to be the same in PSCCH and in PSSCH. This eliminates the difference in transmission power between symbols and the need for time for power conditioning between symbols, which is called a Tangent period.

The size of PSSCH may be (pre-) configured for each resource pool. The size of PSSCH may be specified by the number of PRBs or the interlace number, for example.

Hereinafter, configuration examples of PSSCH and PSCCH will be described.

### <Configuration Example 3A>

In Configuration Example 3A, the size of PSSCH is pre-configured for each resource pool. For example, the size of PSSCH may be configured to be selectable from 10, 12, 15, and 20 PRB, in the same manner as in the licensed band.

In Configuration Example 3A, PSCCH are mapped in the order from the PRB with the lowest PRB number among the subchannels to which PSSCH is allocated. For example, terminal 200 maps PSCCH included in the transmission signal to the PRB with a smaller PRB number among the plurality of PRBs composing the subchannel.

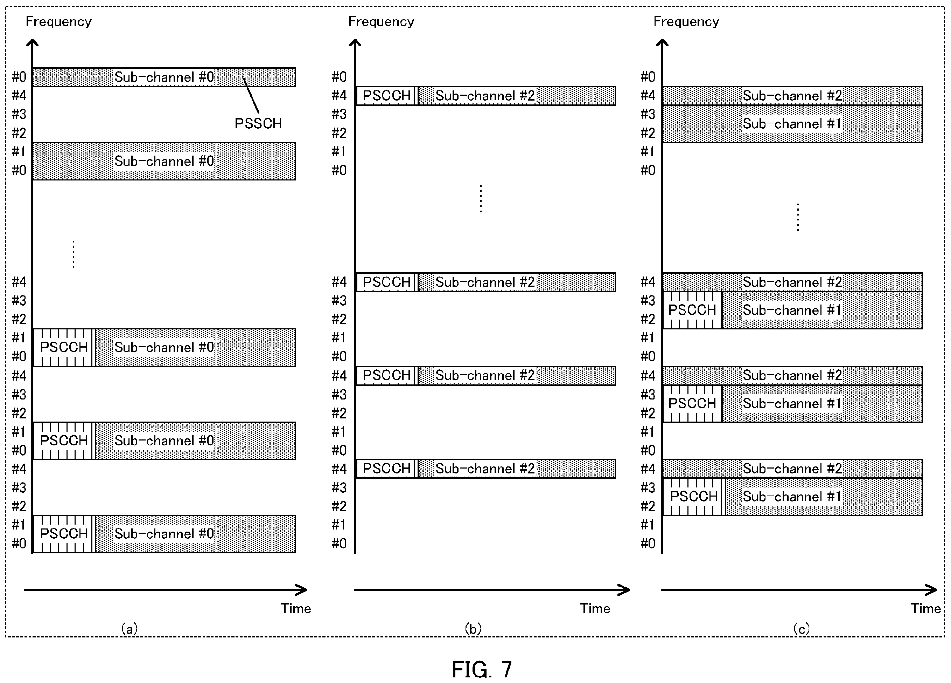

FIG. 7 illustrates an mapping example of channels according to Configuration Example 3A. FIG. 7 illustrates, as an example, a case where SCS = 30 kHz and three subchannes are included per RB set (e.g., divided into three). In the example illustrated in FIG. 7, subchannel #0 includes interlaces #0 and #1, subchannel #1 includes interlaces #2 and #3, and subchannel #2 includes interlace #4.

In (a) of FIG. 7, transmission source terminal 200 selects subchannel #0 (interlaces #0 and #1) and transmits PSSCH. In this case, PSCCH may be mapped to the PRB with a smaller PRB number (or lower frequency) among a plurality of PRBs composing subchannel #0. As illustrated in (a) of FIG. 7, among the PRBs composing subchannel #0, the higher the PRB number is, the less likely PSCCH is mapped, and only PSSCH is mapped.

In (b) of FIG. 7, transmission source terminal 200 selects subchannel #2 (interlace #4) and transmits PSSCH. In this case, PSCCH may be mapped to the PRB with a smaller PRB number (or lower frequency) among PRBs composing subchannel #2.

In the example of FIG. 7, the number of PRBs (or the number of interlaces) included in subchannel #2 is less than that in subchannel #0. Therefore, in (b) of FIG. 7, PSCCH is mapped in a wide range of frequency bands and is transmitted, as compared to a case where subchannel #0 is allocated (e.g., (a) of FIG. 7). For example, when the number of PRBs in the subchannel is the same as the number of PRBs to which PSCCH is allocated, PSCCH is transmitted via all PRBs in the subchannel.

Note that, when the number of PRBs to which PSCCH is allocated is greater than the number of PRBs in the subchannel, transmission source terminal 200 cannot transmit all of PSCCHs. In this case, as the configuration of the resource pool, a limitation may be imposed such that the number of PRBs to which PSCCH is allocated is not configured to be greater than the number of PRBs in the subchannel, and transmission source terminal 200 need not transmit some PSCCHs.

In(c) of FIG. 7, transmission source terminal 200 selects subchannels #1 and #2 and transmits PSSCH. When a plurality of subchannels is selected, PSCCH may be mapped to subchannel #1 with a smaller number among subchannels #1 and #2. Further, PSCCH may be mapped to the PRB with a smaller PRB number among PRBs composing subchannel #1. As illustrated in (c) of FIG. 7, among the PRBs composing subchannel #1, the higher the PRB number is, the less likely PSCCH is mapped, and only PSSCH is mapped.

Further, in (c) of FIG. 7, PSCCH is not mapped to subchannel #2 in transmission source terminal 200, but PSCCH transmission may be performed via subchannel #2 as illustrated in (b) of FIG. 7, so that another terminal (e.g., destination terminal 200) may attempt to receive PSCCH via each of subchannel #0, subchannel #1, and subchannel #2.

Further, for example, when the number of PRBs to which PSCCH is allocated is greater than the number of PRBs in subchannel #n, transmission source terminal 200 may transmit PSCCH using a PRB in subchannel #n+1 in addition to a PRB in subchannel #n. In this case, PSCCH may be mapped to the PRB with a smaller PRB number among PRBs composing subchannel #n+1.

According to Configuration Example 3A, it is advantageous in that the size of PSCCH can be determined independently of the number of PRBs included in a subchannel and the number of PRBs included in an interlace. For example, destination terminal 200 can specify the mapping of PSCCH based on the number of PRBs to which PSSCH is allocated, even when the number of PRBs included in each subchannel varies.

### <Configuration Example 3B>

In Configuration Example 3B, the size of PSSCH is pre-configured for each resource pool. For example, the size of PSSCH may be configured to be selectable from 10, 12, 15, and 20 PRB, in the same manner as in the licensed band.

In Configuration Example 3B, PSCCH is mapped in the order from the lowest PRB number of PRBs included in the interlace with a smaller interlace number of interlaces included in the subchannel to which PSSCH is allocated. For example, terminal 200 maps PSCCH included in the transmission signal to the PRB with a smaller PRB number included in the interlace with a smaller interlace number, among the plurality of PRBs composing the subchannel.

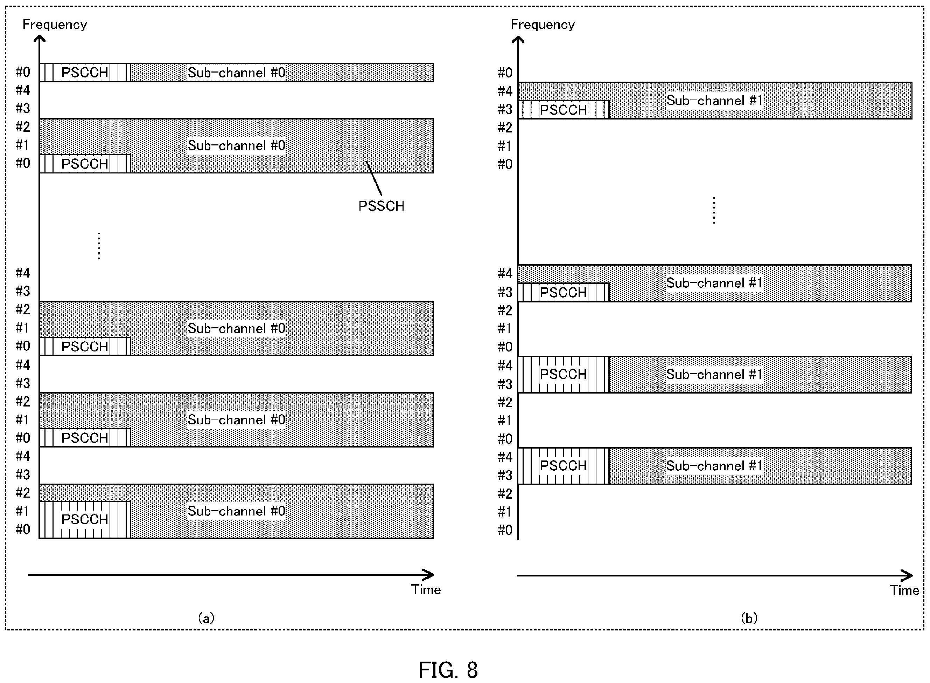

FIG. 8 illustrates an mapping example of channels according to Configuration Example 3B. FIG. 8 illustrates, as an example, a case where SCS = 30 kHz and two subchannes are included per RB set (e.g., divided into two). In the example illustrated in FIG. 8, subchannel #0 includes interlaces #0, #1, and #2, and subchannel #1 includes interlaces #3 and #4.

In (a) of FIG. 8, transmission source terminal 200 selects subchannel #0 (interlaces #0, #1, and #2) and transmits PSSCH. In this case, PSCCH is mapped to interlace #0 with a smaller interlace number among interlaces #0, #1, and #2 composing subchannel #0. Further, PSCCH is mapped to the PRB with a smaller PRB number (or lower frequency) of a plurality of PRB included in interlace #0.

Further, for example, when the number of PRBs to which PSCCH is allocated is greater than the number of PRBs included in interlace #0, PSCCH may be mapped to interlace #1 in addition to interlace #0, as illustrated in (a) of FIG. 8. At this time, PSCCH is mapped to the PRB with a smaller PRB number (or lower frequency) among the plurality of PRBs included in interlace #1.

In (b) of FIG. 8, transmission source terminal 200 selects subchannel #1 (interlaces #3 and #4) and transmits PSSCH. In this case, PSCCH is mapped to interlace #3 with a smaller interlace number among interlaces #3 and #4 composing subchannel #1. Further, PSCCH is mapped to the PRB with a smaller PRB number (or lower frequency) of a plurality of PRB included in interlace #3.

Further, for example, when the number of PRBs to which PSCCH is allocated is greater than the number of PRBs included in interlace #3, PSCCH may be mapped to interlace #4 in addition to interlace #3, as illustrated in (b) of FIG. 8. At this time, PSCCH is mapped to the PRB with the lower PRB number (or lower frequency) among the plurality of PRBs included in interlace #4.

According to Configuration Example 3B, as in Configuration Example 3A, it is advantageous in that the size of PSCCH can be determined independently of the number of PRBs included in a subchannel and the number of PRBs included in an interlace. For example, destination terminal 200 can specify the mapping of PSCCH based on the interlace and the number of PRBs to which PSSCH is allocated, even when the number of PRBs included in each subchannel varies.

Additionally, in Configuration Example 3B, PSCCH is first mapped to one interlace in a subchannel, which is advantageous in that PSCCH is transmitted dispersedly in a frequency-direction and a high frequency-diversity effect is thus obtained, as compared to Configuration Example 3A.

### <Configuration Example 3C>

In Configuration Example 3C, the size of PSSCH is pre-configured for each resource pool. For example, the size of PSSCH may be configured to be selectable from 10, 12, 15, and 20 PRB, in the same manner as in the licensed band.

In Configuration Example 3C, the size of PSCCH is pre-configured as the number of interlaces (e.g., specified number) for each resource pool.

In Configuration Example 3C, PSCCH is mapped in the order from a smaller PRB number among the PRBs included in a specified number of interlaces with smaller interlace numbers included in the subchannel to which PSSCH is allocated. For example, terminal 200 maps PSCCH included in the transmission signal in the PRB with a smaller r PRB number in the specified number of interlaces with a smaller interlace numbers among the plurality of interlaces included in the subchannel.

Hereinafter, as an example, a case will be describe where one interlace is (pre-) configured to the size (predetermined number) of PSCCH. The size of PSCCH may be two interlaces or more.

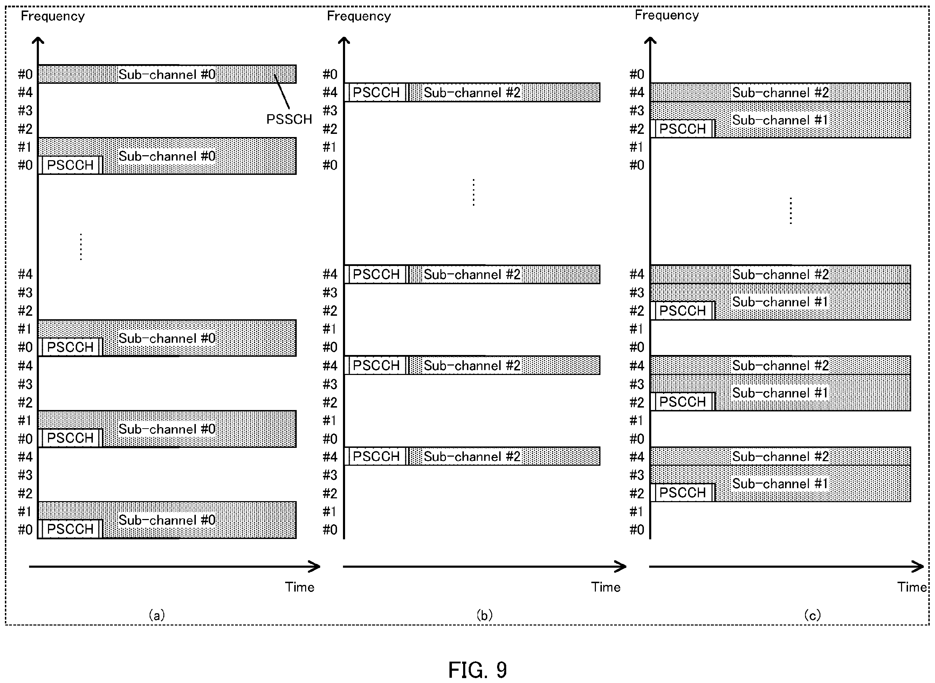

FIG. 9 illustrates an mapping example of channels according to Configuration Example 3C. FIG. 9 illustrates, as an example, a case where SCS = 30 kHz and three subchannes are included per RB set (e.g., divided into three). In the example illustrated in FIG. 9, subchannel #0 includes interlaces #0 and #1, subchannel #1 includes interlaces #2 and #3, and subchannel #2 includes interlace #4.

In (a) of FIG. 9, transmission source terminal 200 selects subchannel #0 (interlaces #0 and #1) and transmits PSSCH. In this case, PSCCH is mapped to the PRB with a smaller PRB number (or lower frequency) among a plurality of PRBs composing one interlace #0 with a smaller interlace number among interlaces #0 and #1 included in subchannel #0.

Incidentally, when the number of PRBs included in each interlace varies, the number of PRBs (e.g., PSCCH size) to which PSCCH is allocated may be configured to match with the smaller (e.g., smallest) number of PRBs of the number of PRBs included in each interlace. For example, in (a) of FIG. 9, when the number of PRBs included in interlace #0 is greater than the number of PRBs included in other interlaces, the PSCCH size may be set to the number of PRBs included in the other interlaces. In (a) of FIG. 9, since the number of PRBs included in interlace #0 is greater than the number of PRBs included in each of the other interlaces #1 to #4, the PSCCH size may be configured to match with the number of PRBs in each of interlaces #1 to #4. Therefore, as illustrated in (a) of FIG. 9, PSCCH is not mapped to the PRB with a higher PRB number (or higher frequency) of the PRBs included in interlace #0.

In (b) of FIG. 9, transmission source terminal 200 selects subchannel #2 (interlace #4) and transmits PSSCH. In this case, PSCCH is mapped to the PRB with a smaller PRB number of interlace #4 included in subchannel #2. In the example in (b) of FIG. 9, PSCCH is mapped in all PRBs included in interlace #4.

In (c) of FIG. 9, transmission source terminal 200 selects subchannel #1 (interlaces #2 and #3) and subchannel #2 (interlace #4) and transmits PSSCH. In this case, PSCCH is mapped to subchannel #1 with a smaller number among subchannels #1 and #2. In addition, PSCCH is mapped to the PRB with a smaller a smaller PRB number (or lower frequency) among a plurality of PRBs composing one interlace #2 with a smaller interlace number among interlaces #2 and #3 included in subchannel #1. In the example in (c) of FIG. 9, PSCCH is mapped in all PRBs included in interlace #2.

Further, in (c) of FIG. 9, PSCCH is not mapped to subchannel #2 in transmission source terminal 200, but PSCCH transmission may be performed via subchannel #2 as illustrated in (b) of FIG. 9, so that another terminal (e.g., destination terminal 200) may attempt to receive PSCCH via each of subchannel #0, subchannel #1, and subchannel #2.

According to Configuration Example 3C, since PSCCHs are mapped in interlaced units, the mapping relationship between PSCCH and the interlace in each subchannel is the same even when the number of interlaces in subchannels varies between subchannels, thus making the reception of PSCCH in destination terminal 200 easy. For example, in the example illustrated in FIG. 9, in any case of (a) to (c) in FIG. 9, PSCCH is mapped to one interlace with a smaller interlace number among interlaces included in a subchannel to which PSSCH is allocated.

### <Configuration Example 3D>

In Configuration Example 3D, mapping (arrangement) from a Virtual resource block (VRB) to a PRB is performed.

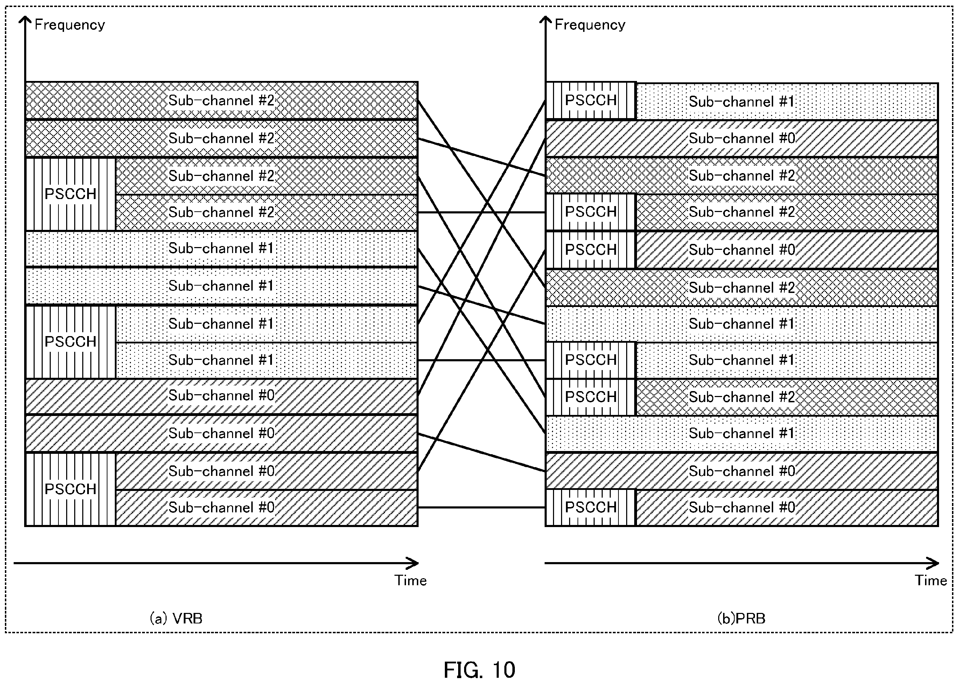

FIG. 10 illustrates an example of mapping from the VRB to the PRB.

In the VRB, for example, RBs in a subchannel may be mapped continuously. In the example of FIG. 10, each of subchannels #0 to #2 may include four consecutive VRBs.

Further, PSCCH may be mapped to the consecutive VRBs, for example. In the example of FIG. 10, PSCCH is mapped to two consecutive VRBs with smaller numbers among each of subchannels #0 to #2.

The VRB may follow at least one of the subchannel configuration in sidelink in the licensed band and the consecutive allocation in the frequency direction without the use of interlace mapping in the unlicensed band. For the mapping from the VRB to the PRB, interleaving rules or interlace rules may be (pre-) configured for a resource pool.

Further, in the PRBs, subchannels may be allocated to partly contiguous PRBs and non-contiguous PRBs.

Thus, the mapping from the VRB to the PRB makes it possible to use the same design in consecutive maping and non-consecutive maping of PRBs (e.g., same mapping as interlace).

The configuration examples of PSCCH of Operation Example 3 have been each described, thus far.

### [Configuration of Terminal 200]

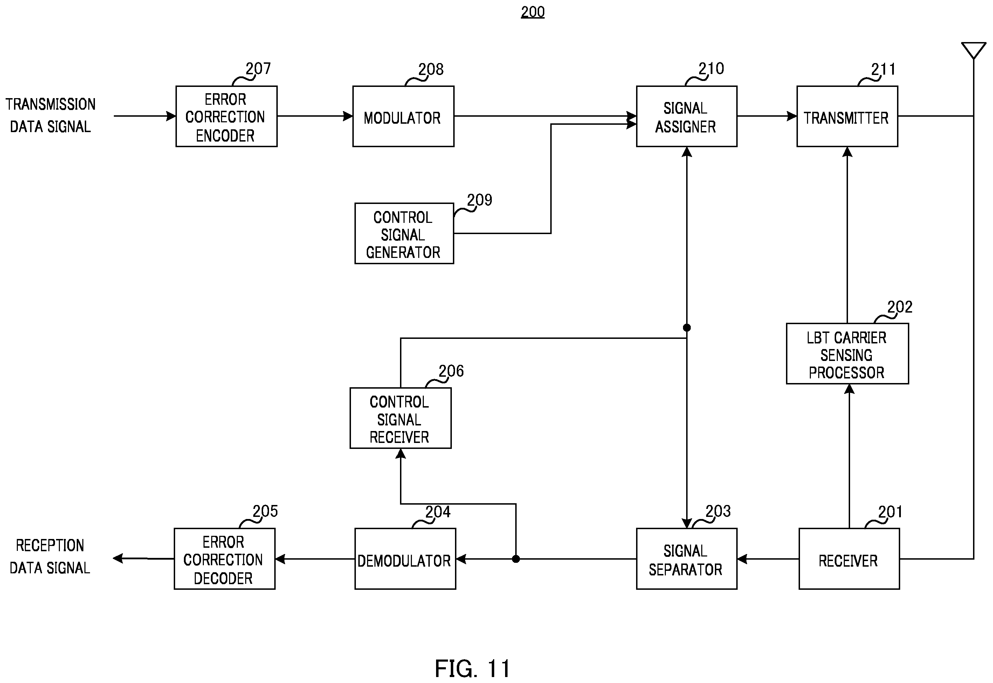

FIG. 11 is a block diagram illustrating an exemplary configuration of terminal 200 according to the present embodiment. Terminal 200 illustrated in FIG. 11 includes receiver 201, LBT carrier sensing processor 202, signal separator 203, demodulator 204, error correction decoder 205, control signal receiver 206, error correction encoder 207, modulator 208, control signal generator 209, signal assigner 210, and transmitter 211.

Note that, at least one of LBT carrier sensing processor 202, signal separator 203, demodulator 204, error correction decoder 205, control signal receiver 206, error correction encoder 207, modulator 208, control signal generator 209, signal assigner 210 may be included in the controller illustrated in FIG. 6. Further, at least one of receiver 201 and transmitter 211 may be included in the communicator illustrated in FIG. 6.

Terminal 200 may be a transmission terminal (or transmission source terminal) that transmits a sidelink signal in sidelink communication or a reception terminal (or destination terminal) that receives a sidelink signal in sidelink communication.

Receiver 201 receives a reception signal via an antenna, and performs reception processing such as down-conversion on the reception signal. The reception signal is, for example, a sidelink signal including PSSCH and/or PSCCH. Note that the sidelink signal may include PSFCH. Further, the reception signal received by receiver 201 may include an idle period or may include a signal other than a sidelink signal (downlink signal from base station 100). Receiver 201 outputs the reception signal after the reception processing to LBT carrier sensing processor 202 and signal separator 203.

LBT carrier sensing processor 202 performs carrier sense (also referred to as LBT) based on the reception signal input from receiver 201. LBT carrier sensing processor 202 may judge, based on the reception signal, whether the channel state is "busy (or LBT failure)" or "idle (or LBT OK)." In other words, LBT carrier sensing processor 202 may judge whether the channel is available based on the reception signal input from receiver 201. LBT carrier sensing processor 202 outputs information indicating the judged channel state to transmitter 211.

Signal separator 203 outputs, to demodulator 204, a reception data signal among the reception signal input from receiver 201. The reception data signal is, for example, mapped to PSSCH. Further, signal separator 203 separates the 1st stage SCI to be mapped to PSCCH and the 2nd stage SCI to be mapped to a part of PSSCH from the reception signal input from receiver 201. Signal separator 203 outputs the separated information to control signal receiver 206.

Demodulator 204 performs demodulation processing on the reception signal input from signal separator 203. Demodulator 204 outputs the demodulated signal obtained through the demodulation processing to error correction decoder 205.

Error correction decoder 205 decodes the demodulated signal input from demodulator 204 and outputs the decoded signal as reception data.

Control signal receiver 206 identifies (or grasps) resource allocation information including a reserved resources, based on the 1st stage SCI included in the signal input from signal separator 203. Control signal receiver 206 then outputs, to signal assigner 210, the resource allocation information to avoid overlap with another resource. Further, control signal receiver 206 identifies (or grasps) the transmission ID and the reception ID based on the 2nd stage SCI included in the signal input from signal separator 203. Control signal receiver 206 judges whether resource allocation for terminal 200 is present, based on the spicified transmission ID and reception ID. In a case where the resource allocation for terminal 200 is present, control signal receiver 206 instruct signal separator 203 to separate the recedption signal.

Error correction encoder 207 inputs a data signal, performs error correction encoding on the data signal, and outputs the data signal subjected to the error correction encoding to modulator 208.

Modulator 208 modulates the signal input from error correction encoder 207, and outputs the modulated signal to signal assigner 210.

Control signal generator 209 generates signals for the 1st stage SCI and the 2nd stage SCI from the control information that is not illutrated. Control signal generator 209 outputs the signals for the 1st stage SCI and the 2nd stage SCI to signal assigner 210.

Signal assigner 210 assigns the modulated signal input from modulator 208 to a resource. At that time, signal assigner 210 may assign the signal to a resource while taking into account the signal input from control signal generator 209. For example, signal assigner 210 may determine mapping of PSCCH through which the 1st stage SCI is transmitted, based on the size of PSCCH configured for each resource pool. After performing the resource allocation, signal assigner 210 outputs a transmission signal to transmitter 211.

In a case where the sensing result acquired from LBT carrier sensing processor 202 indicates an idle state, transmitter 211 performs transmission processing such as up-conversion on the transmission signal input from signal assigner 210, and transmits the transmission signal after the transmission processing via an antenna.

The descriptions have been given of the operation examples according to the present embodiment.

In such a manner, in the present embodiment, terminal 200 allocates PSCCH/PSSCH to a subchannel configured with the interlaces with consecutive numbers in sidelink communication in the unlicensed band and thus transmits PSCCH/PSSCH. This allows terminal 200 to appropriatey configure the subchannel and the interlace mapping in sidelink communication in the unlicensed band. For example, the allocation in subchannel units configured with interlaces with consecutive numbers makes it possible to reduce the effect of interference between terminal 200 and other terminals. Therefore, according to the present embodiment, it is possible to improve the resource-utilization efficiency in sidelink communication in an unlicensed band.

In the present embodiment, a case has been described where the subchannel is configured with the interlaces with the consecutive interlace numbers, but the present disclosure is not limited this case. The subchannel may be configured with interlaces with non-consecutive interlace numbers or may be configured with interlaces with both consecutive interlace numbers and non-consecutive interlace numbers.

Further, in the present embodiment, a case has been described where PSCCH is mapped in the order from a smaller PRB number, a smaller interlace number, or a smaller subchannel number, but the present disclosure is not limited this case. PSCCH may be mapped, for example, in the order from a higher number (e.g., higher frequency) for at least one of the PRBs, interlaces, and subchannels or may be mapped in the predetermined order.

### (Embodiment 2)

In the present embodiment, descriptions will be given of a resource allocation method and a transmission method when a plurality of time resources (e.g., symbols) for detecting PSCCH in destination terminal 200 are mapped in a slot.

In the license band, a mapping position of PSCCH in sidelink is only at the beginning of a slot. The present embodiment assumes that, for example, PSCCH is mapped at another position of the slot in addition to the beginning of the slot and an additional PSCCH starting position (referred to as Additional PSCCH starting point or Additional starting point) is configured.

Incidentally, the number of Additional starting points is not limited to one within the slot, and a plurality of Additional starting points may be configured (or mapped) within one slot.

A case will be described where the Additional starting point is configured.

### [Case 1]

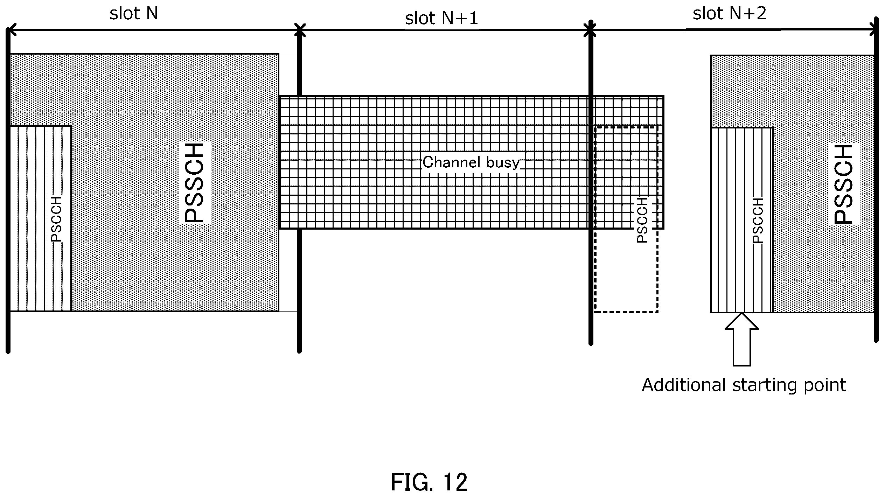

Case 1 is a case where transmission source terminal 200 performs LBT to find channels are used by another system or another apparatus (busy state or LBT failure) and thus cannot acquire the transmission right and transmit PSCCH/PSSCH from the beginning of slot N+2, as illustrated in FIG. 12.

In Case 1, transmission source terminal 200 may perform LBT at the Additional starting point in the middle of slot N+2, as illustrated in FIG. 12, to confirm that no channels are used by another system or another apparatus, and thus can transmit PSCCH/PSSCH when acquiring the transmission right.

In Case 1, the mapping of PSCCH (or execution of LBT) at the Additional starting point may be performed in the slot to which a previously reserved resource is mapped. For example, in a slot to which the previously reserved resource is not mapped, the Additional starting point need not be configured.

Further, in Case 1, the length of PSSCH (e.g., symbol length) is determined in accordance with a starting position of PSCCH. For example, when PSCCH is mapped from the first symbol of a slot (e.g., sidelink slot), the length of PSSCH may be configured to a length same as that of the slot. Further, when PSCCH is mapped from the Additional starting point in the slot, the length of PSSCH may be configured to an interval from the Additional starting point of PSCCH to the end of the slot.

For example, when detecting PSCCH in the first symbol of the slot, destination terminal 200 may specify that the length of PSSCH is the same length as the slot. Moreover, when detecting PSCCH in the Additional starting point, destination terminal 200 may specify that the length of PSSCH is the interval from the Additional starting point to the end of the slot. Thus, destination terminal 200 can specify the length of PSCCH (PSCCH size) based on the position where PSCCH in the slot is detected; hence, information on the length of PSSCH need not be indicated to destination terminal 200.

### [Case 2]

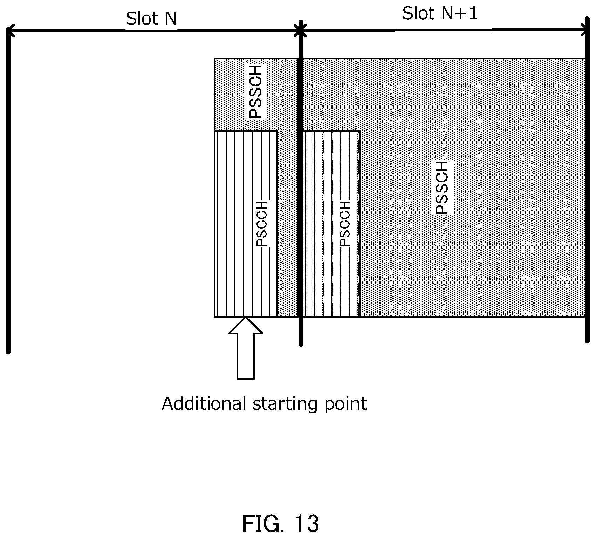

Case 2 is a case where transmission source terminal 200 reserves a resource for slot N+1, as illustrated in FIG. 13.

In Case 2, as illustrated in FIG. 13, when confirming that there is no transmission from the beginning of slot N, transmission source terminal 200 may perform LBT in the Additional starting point in the middle of slot N and acquire the transmission right for slot N+1.

For example, when acquiring the transmission right in the Additional starting point of slot N, transmission source terminal 200 may transmit PSCCH/PSSCH from the Additional starting point of slot N over the reserved resource for slot N+1. At this time, transmission source terminal 200 may map PSCCH to each of the Additional starting point of slot N and the starting symbol of slot N+1, as illustrated in FIG. 13.

This allows transmission source terminal 200 to acquire the transmission right faster than the reserved resource. For this reason, other terminals are not capable of performing transmission at a faster timing than the reserved resource, and terminal 200 is more likely to be capable of transmitting PSCCH/PSSCH with the reserved resources. In other words, in transmission source terminal 200, the possiblity that the transmission of PSCCH/PSSCH is canceled due to failure of acquisition of the transmission righ in the reserved resource can be reduced.

### [Case 3]

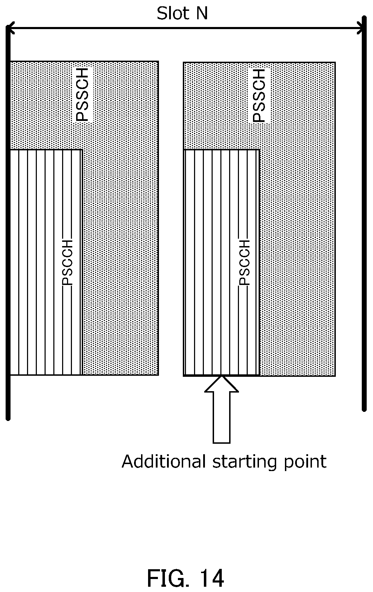

Case 3 is a case where the number of symbols capable of transmitting PSSCH is configurable to be shorter than the slot length, as illustrated in FIG. 14.

In Case 3, the number of symbols for PSSCH transmission is configurable to be shorter than the slot length, e.g., a plurality of PSSCH/PSCCHs can be mapped to a time resource in one slot.

For example, transmission source terminal 200 may perform LBT at either or both of the beginning of slot N and the Additional starting point in the middle of slot N, as illustrated in FIG. 14, to confirm that no channels are used by another system or another apparatus, and thus can transmit PSCCH/PSSCH when acquiring the transmission right.

In Case 3, transmission source terminal 200 may indicate the length of PSSCH to destination terminal 200 by PSCCH. For example, when the length of PSCCH is 14 symbols, PSSCH is mapped to all symbols in the slot, and when the length of PSCCH is 7 symbols, PSCCH is mapped to a minislot. The length of PSCCH is not limited to 14 symbols or 7 symbols and may be other lengths.

The cases where the Additional starting point is configured have been each described, thus far.

As in these cases, when PSCCH is detectable at the Additional starting point, the number of times PSCCH is detected (PSCCH detection, the number of BD times) in one slot in destination terminal 200 may be increased. As described above, since the detection of PSCCH is performed for each subchannel, the less the number of subchannels is (e.g., when limited), the number of times of PSCCH detection is reduced.

Therefore, in the present embodiment, the number of subchannels to be configured for a resource pool may be determined in accordance with the configuration of the Additional starting point. For example, the number of subchannels when the Additional starting point is configured may be configured to be less than the number of subchannels when no Additional starting point is configured. Further, for example, the more the number of starting positions (e.g., starting symbols and Additional starting points) to which PSCCH can be mapped in a slot is, the less the number of subchannels configurable in the slot may be configured. Thus, when the Additional starting point is configured, the number of subchannels to be configured in the resource pool may be limited.

Next, operation examples in terminal 200 according to the present embodiment will be described.

### [Operation Example 1]

Operation Example 1 will describe a configuration example of subchannel in accordance with the configuration of the Additional starting point.

### <Configuration Example 1A>

When no Additional starting point is configured (or added), let the number of subchannels configurable in a slot be C.

For example, when there are K time resources that attempt to detect PSCCH in one slot including an Additional starting point, the number of subchannels configurable in the slot may be set (e.g., limited) to C/K.

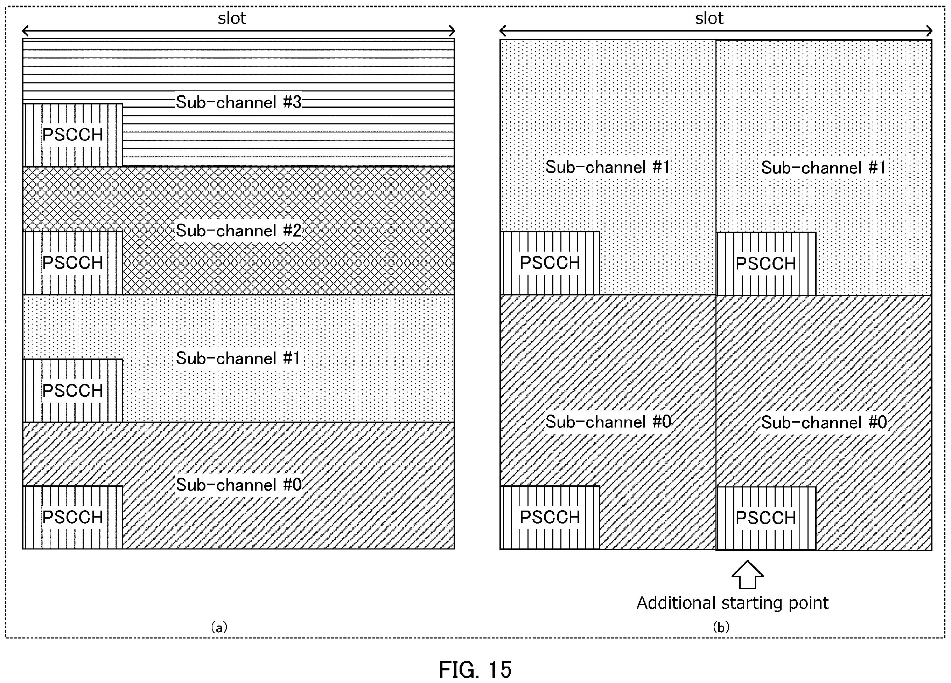

For example, as illustrated in (a) of FIG. 15, let the number of subchannels configurable in the slot when no Additional starting point is configured be C = 4. In (a) of FIG. 15, destination terminal 200, for example, attempts to detect PSCCH in C = 4 subchannels (e.g., subchannels #0 to #3) in the slot (e.g., the number of times of PSCCH detection: four).

Further, as illustrated in (b) of FIG. 15, when there are K = 2 time resources that attempt to detect PSCCH in one slot including an Additional starting point (e.g., beginning of slot and one Additional starting point), the number of subchannels configurable in the slot is set (limited) to C/K = 2. In (b) of FIG. 15, destination terminal 200, for example, attempts to detect PSCCH in C/K = 2 subchannels (e.g., subchannels #0 and #1) at each of the beginning of the slot and the Additional starting point in the slot (e.g., the number of times of PSCCH detection: four).

According to Configuration Example 1A, it is possible to suppress the increase in number of times of PSCCH detection per slot even when a plurality of time resources that attempt to detect PSCCH including an Additional starting point is configured.

### <Configuration Example 1B>

In Configuration Example 1B, when there are K time resources that attempt to detect PSCCH in one slot including an Additional starting point, the number of times of PSCCH detection corresponding to the number of subchannels x the number of time resources may be configured to not exceed the number of times conforming to the number of times terminal 200 can receive PDCCH transmitted from base station 100 per slot.

For example, the number of subchannels (or subchannel size), and the number of Additional starting points may be configured in accodance with the configuration value of the number of times of PSCCH detection.

The number of times terminal 200 can receive per slot PDCCH transmitted from base station 100 may be configured by Capability or specification of terminal 200, for example.

### <Configuration Example 1C>

In Configuration Example 1C, when an Additional starting point is configured, one subchannel is configured in an RB set. Therefore, for example, a 20-MHz band corresponding to the RB set is configured to the one subchannel.

Thus, the number of times of PSCCH detection can be reduced by configuring the subchannel size to be the same as the size of RB set when the Additional starting point is configured,.

As a variation of Configuration Example 1C, when K (e.g., thresholds) or more Additional starting points are configured, configuration (or limitation) such that one subchannel is configured within an RB set may be added.

Further, in Configuration Example 1C, the number of subchannels to be configured when the Additional starting point is configured is not limited to one and may be other numbers.

Operation Example 1 has been described, thus far.

### [Operation Example 2]

In Operation Example 2, as in Case 3 described above, a description will be given of a configuration example of PSFCH of a case where transmission is performed multiple times of PSSCH that has a length shorter than 14 symbols and that is also called a minislot in a slot. For example, the mapping of PSFCH for a plurality of PSSCHs mapped to a time resource in one slot is not specified in sidelink communication.

### <Configuration Example 2A>

In Configuration Example 2A, PSFCH is not configured (or supported) when an Additional starting point is configured and there is a possibility of transmission of a plurality of PSSCHs to a time resource in a slot.

Thus, there is no need to configure the association between PSFCH and PSSCH corresponding to the Additional starting point.

Further, since transmission in the minislot enablws retransmission in a short period, it is assumed that retransmission is performed based on the line quality without waiting for the HARQ-ACK feedback by PSFCH. In this case, the effect of PSFCH being not configured can be reduced with respect to the retransmission control.

### <Configuration Example 2B>

In Configuration Example 2B, PSFCH for an Additional starting point may be configured (prepared).

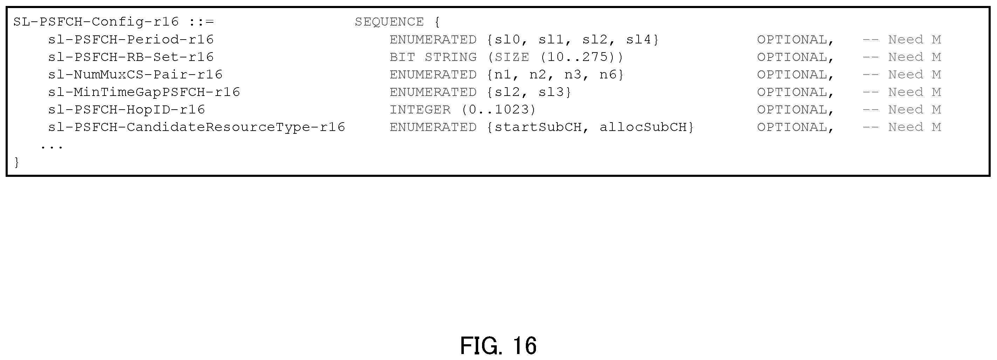

A PSFCH resource for PSSCH allocated by the first PSCCH in a slot may be configured in accordance with "SL-PSFCH-Config" (e.g., FIG. 16) of PSFCH rules (e.g., NPL 4) defined in Release 16 (Rel. 16) or a newly configured mapping, for example.

Further, a PSFCH resource for PSSCH allocated by PSCCH mapped in the Additional starting point may be newly configured. For example, the PSFCH resource for PSSCH allocated by PSCCH mapped in the Additional starting point may be configured as "sl-PSFCH-RB-Set" indicating a position of a PRB resource for PSFCH among "sl-PSFCH-RB-Set-r16" in the "SL-PSFCH-Config," separately from the existing configuration, as illustrated in FIG. 16.

The "sl-PSFCH-RB-Set" is a parameter for indicating a PRB used for transmission and reception of PSFCH, for example. For example, the "sl-PSFCH-RB-Set" may indicate whether each of the plurality of PRBs is used for transmission/ reception of PSFCH in a bitmap format. For example, at least one of PRBs expressed by the sl-PSFCH-RB-Set may include a PSFCH resource for PSSCH allocated by PSCCH mapped in the Additional starting point.

Configuration Example 2B enables the frequency multiplexing of PSFCH for a plurality of PSSCHs mapped within a slot.

Note that PSFCH for the plurality of PSSCHs may be allocated to a plurality of resources on a time-axis, without limitation on allocation to the plurality of resources on a frequency-axis.

### <Configuration Example 2C>

PSFCH in sidelink communication in the licensed band is mapped to the second symbol from the end of a slot, as illustrated in (a) of FIG. 1.

In Configuration Example 2C, when an Additional starting point is configured, a resource to which PSFCH is mapped on a time axis in a slot may be newly configured.

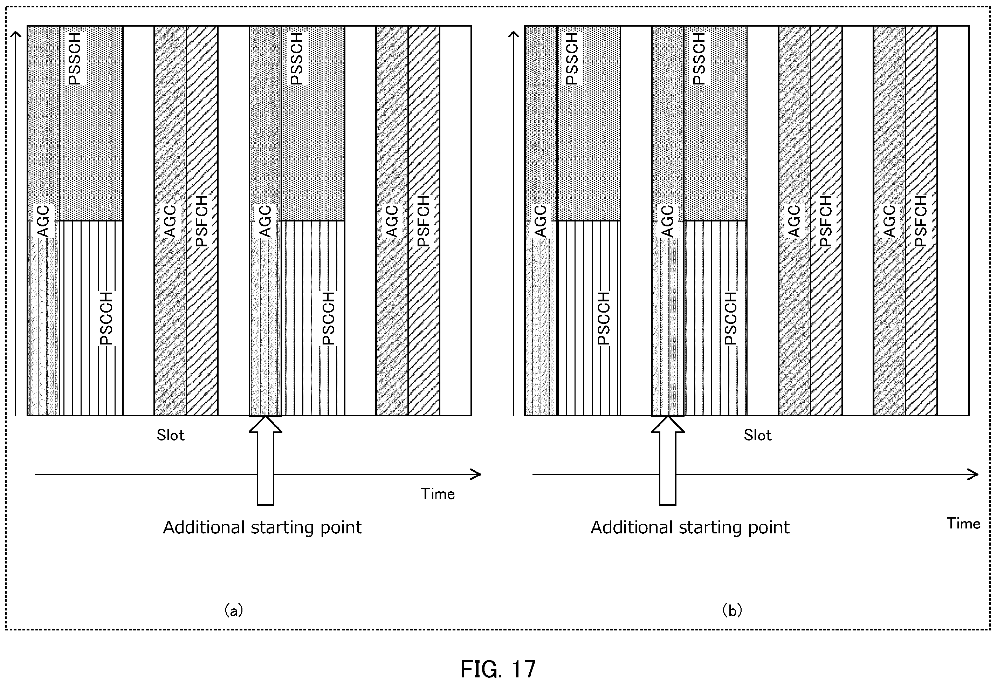

For example, as illustrated in (a) of FIG. 17, PSFCH may be mapped before PSCCH to be mapped to the Additional starting point. Alternatively, as illustrated in (b) of FIG. 17, a new PSFCH may be mapped before PSFCH mapped to the second symbol from the end of the slot.

### <Configuration Example 2D>

In Configuration Example 2D, when an Additional starting point is configured and a plurality of PSSCHs can be transmitted on a time resource in a slot, a resource may be configured with respect to PSFCH for PSSCH allocated by the first PSCCH of the plurality of PSSCHs, based on PSFCH rules defined in Rel. 16 or newly defined mapping.

On the other hand, no resource is configured with respect to PSFCH for PSSCH corresponding to PSCCH mapped to the Additional starting point, among the plurality of PSSCHs in the slot.

Thus, transmission source terminal 200 receives an HARQ-ACK feedback on PSSCH allocated by the first PSCCH and receives no HARQ-ACK feedback on PSSCH allocated by PSCCH at the Additional starting point. For example, transmission source terminal 200 can use different PSCCHs depending on the application: using the first PSCCH in the slot when the HARQ-ACK feedback is required, and using PSCCH at the Additional starting point when no HARQ-ACK is required.

The configuration examples of PSFCH have been each described, thus far.

The descriptions have been given of the operation examples according to the present embodiment.

The operation examples of the present embodiment are applicable even when the mapping of PRB to which PSSCH is allocated is contiguous mapping, or is interlace mapping as in Embodiment 1.

As above, in the present embodiment, terminal 200 configures an Additional starting point in a slot, thereby increasing the number of times PSCCH can be transmitted in the slot (or the number of times PSCCH can be detected). Thus, for example, transmission source terminal 200 can perform LBT in the Additional starting point in the middle of the slot even when the LBT result at the beginning of the slot is busy (LBT failure), which increases the possibility of acquiring the transmission right. Alternatively, for example, transmission source terminal 200 may transmit a plurality of PSSCHs in the slot, as in a minislot.

Therefore, according to the present embodiment, it is possible to improve the resource-utilization efficiency in sidelink communication in an unlicensed band.

Each of the embodiments has been described, thus far.

### [Variation]

Note that, the operation examples of the embodiments described above may be used in combination.

Further, terminals that perform transmission and/or reception in sidelink include a terminal that performs transmission and does not perform reception in sidelink, a terminal that performs reception and does not perform transmission in sidelink, and a terminal that performs both transmission and reception in sidelink.

Further, when a configuration relating to sidelink is configured in advance, the configuration method may be configured in advance in specifications (standards) or may be configured in advance in a subscriber identity module (SIM). Alternatively, the configuration relating to sidelink may be configured in an application layer called pre-configured, in a higher layer such as a system information block (SIB) called configured and/or another radio resource control (RRC), or in a medium access control (MAC).

Further, each of the embodiments described above illustrates the case of sidelink communication, but the present disclosure is not limited thereto. For example, in each embodiment described above, PSCCH may be replaced with PDCCH, PSSCH may be replaced with PDSCH or PUSCH, PSFCH may be replaced with PUCCH, and PSBCH may be replaced with PBCH, and the present disclosure may be applied to communication between the base station and the terminal.

Further, each of the embodiments described above may be applied to Mode 2 and may not be applied to Mode 1, or may be applied to both Mode 1 and Mode 2, or may be applied to Mode 1 and may not be applied to Mode 2. Further, in the operation examples in the embodiments described above, an operation example to which Mode 1 is applied and an operation example to which Mode 2 is applied may be the same or different. For example, there may be an operation example that is applied to Mode2 and is not applied to Mode1.

Further, when each of the embodiments described above is applied to Mode 1, which of Type 2A, 2B, and 2C in Type 2 LBT is selected may be instructed by the base station in a licensed band.

Further, in the embodiments described above, operation examples in an unlicensed band have been indicated, but the frequency band of an unlicensed band may vary from country to country or may vary for each region. The frequency band of an unlicensed band includes, illustratively, the 5 GHz band (5150 MHz to 5925 MHz), the 6 GHz band (5925 MHz to 7125 MHz), and 52.6 GHz to 71 GHz.

Further, the usability of each of the above-described embodiments or each of the operation examples may be changed according to the SCS.

Further, Type 1 LBT and Type 2 LBT may be called by another names in sidelink communication.

The SCI format to be transmitted in PSCCH may be SCI format 1-A or a newly added SCI format.

Further, the above-described embodiments may be applied to S-PSS/SSS/PSBCH.

Further, in each of the above-described embodiments, the destination terminal may refer to a plurality of terminals for groupcast and broadcast.

The guard band may also be referred to as an intra-cell guard band.

Further, the resource allocation for sidelink communication illustrated in each of the embodiments described above is an example, and the present disclosure is not limited thereto. For example, signals, channels, idle periods, or the like that are not illustrated may be included in resources for the sidelink communication. Further, the widths of signals in the time direction and frequency direction illustrated in the drawings are not limited to the illustrated examples. Further, the size of a slot, the size of a resource, the size of a channel, the size of a signal, and the like are not limited to the examples described above. Further, the value of the SCS, the sensing interval of the LBT, and the like are not limited to those in the examples described above.

Further, each of the embodiments described above has exemplified a case in which the duration of a sidelink signal is adjusted by increasing the CP duration of the sidelink signal by the CP extension, but the present disclosure is not limited thereto. Instead of increasing the CP duration, the duration may be adjusted by adding a known signal.

Further, in each of the embodiments described above, the confirmation of availability of the channel may be replaced with an expression such as sensing (or monitoring) of availability of the channel. Further, in this case, the term "channel" may be replaced with other terms such as "carrier" or "resource."

Further, the indication method of control information from base station 100 to terminal 200 is not limited to the example described above, and the control information may be indicated (or broadcast, instructed, configured) by at least one of system information such as MIB and SIB, RRC control information, MAC control information, and downlink control information (DCI), may be configured in advance to terminal 200, and/or may be predefined in specifications.

The base station may be referred to as a gNodeB or a gNB. Further, the terminal may be referred to as UE.

The resource allocation unit in sidelink communication in an unlicensed band may be a unit other than subchannel and may have a name other than subchannel.

The time resource unit such as a slot may be replaced with another unit such as a system frame, a time slot, a minislot, a frame, a subframe, a block, or the like.

Further, any term ending with a suffix, such as "-er" "-or" or "-ar", in the embodiments described above may be replaced with another term, such as "circuitry," "device," "unit," or "module."

Note that the terms "interpret," "identify," "determine," "judge," "decide," "calculate," "grasp," "recognize," "confirm," or "understand" may be used interchangeably.

### (Complement)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments. Alternatively, the capability information may include information elements that indicate whether terminal 200 supports a combination of any two or more of the functions, operations, or pieces of processing that have been described in the above-mentioned embodiments.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control sidelink communication between terminals 200 based on the capability information received from terminal 200.

Note that in a case where terminal 200 does not entirely support the functions, operations, or pieces of processing described in the above-mentioned embodiments, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

### (Control Signals)

In the present disclosure, the downlink control signal (or downlink control information) related to an exemplary embodiment of the present disclosure may be, for example, a signal (or information) transmitted in a physical downlink control channel (PDCCH) in a physical layer or may be a signal (or information) transmitted in a medium access control control element (MAC CE) or a radio resource control (RRC) in a higher layer. Further, the signal (or information) is not limited to that indicated by the downlink control signal, but may be predefined in specifications (or standards) or may be configured in advance to the base station and the terminal.

In the present disclosure, the uplink control signal (or uplink control information) according to an exemplary embodiment of the present disclosure may be, for example, a signal (or information) transmitted in PUCCH in the physical layer or may be a signal (or information) transmitted in the MAC CE or RRC in the higher layer. Further, the signal (or information) is not limited to that indicated by the uplink control signal, but may be predefined in specifications (or standards) or may be configured in advance to the base station and the terminal. Further, the uplink control signal may be replaced with, for example, uplink control information (UCI), 1st stage sidelink control information (SCI) or 2nd stage SCI.

### (Base Station)

In an exemplary embodiment of the present disclosure, the base station may be, for example, a transmission reception point (TRP), a clusterhead, an access point, a remote radio head (RRH), an eNodeB (eNB), a gNodeB (gNB), a base station (BS), a base transceiver station (BTS), a base unit, a gateway, or the like. Further, in sidelink communication, the terminal may play a role of the base station. Furthermore, instead of the base station, a relay apparatus that relays communication between a higher node and a terminal may be used. The base station may be a roadside unit as well.

### (Uplink/Downlink/Sidelink)

An exemplary embodiment of the present disclosure may be applied to, for example, any of uplink, downlink, and sidelink. For example, an exemplary embodiment of the present disclosure may be applied to uplink channels, such as a Physical Uplink Shared Channel (PUSCH), a Physical Uplink Control Channel (PUCCH), and a Physical Random Access Channel (PRACH), downlink channels, such as a Physical Downlink Shared Channel (PDSCH), PDCCH, and a Physical Broadcast Channel (PBCH), and side link channels, such as a Physical Sidelink Shared Channel (PSSCH), a Physical Sidelink Control Channel (PSCCH), and a Physical Sidelink Broadcast Channel (PSBCH).

Note that, PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

An exemplary embodiment of the present disclosure may be applied to, for example, any of data channels and control channels. For example, channels in an exemplary embodiment of the present disclosure may be replaced with any of data channels including PDSCH, PUSCH, and PSSCH, or control channels including PDCCH, PUCCH, PBCH, PSCCH, and PSBCH.

### (Reference Signals)

In an exemplary embodiment of the present disclosure, the reference signals are, for example, signals known to both a base station and a mobile station and each reference signal may be referred to as a reference signal (RS) or sometimes a pilot signal. Each reference signal may be any of a Demodulation Reference Signal (DMRS), a Channel State Information-Reference Signal (CSI-RS), a Tracking Reference Signal (TRS), a Phase Tracking Reference Signal (PTRS), a Cell-Specific Reference Signal (CRS), or a Sounding Reference Signal (SRS).

### (Time Intervals)

In an exemplary embodiment of the present disclosure, time resource units are not limited to one or a combination of slots and symbols, and may be time resource units, such as frames, superframes, subframes, slots, time slots, subslots, minislots, or symbols, orthogonal frequency division multiplexing (OFDM) symbols, single carrier-frequency division multiplexing (SC-FDMA) symbols, or other time resource units. The number of symbols included in one slot is not limited to any number of symbols exemplified in the embodiments described above, and may be other numbers of symbols.

### (Frequency Bands)

An exemplary embodiment of the present disclosure may be applied to any of a licensed band and an unlicensed band.

### (Communication)

An exemplary embodiment of the present disclosure may be applied to any of communication between a base station and a terminal (Uu-link communication), communication between a terminal and a terminal (Sidelink communication), and Vehicle to Everything (V2X) communication. For example, a channel in an exemplary embodiment of the present disclosure may be replaced with any of PSCCH, PSSCH, a Physical Sidelink Feedback Channel (PSFCH), PSBCH, PDCCH, PUCCH, PDSCH, PUSCH, and PBCH.

Further, an exemplary embodiment of the present disclosure may be applied to any of a terrestrial network or a non-terrestrial network (NTN) using a satellite or a high altitude pseudo satellite (HAPS). In addition, the present disclosure may be applied to a network having a large cell size, and a terrestrial network with a large latency compared with a symbol length or a slot length, such as an ultra-wideband transmission network.

### (Antenna Ports)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

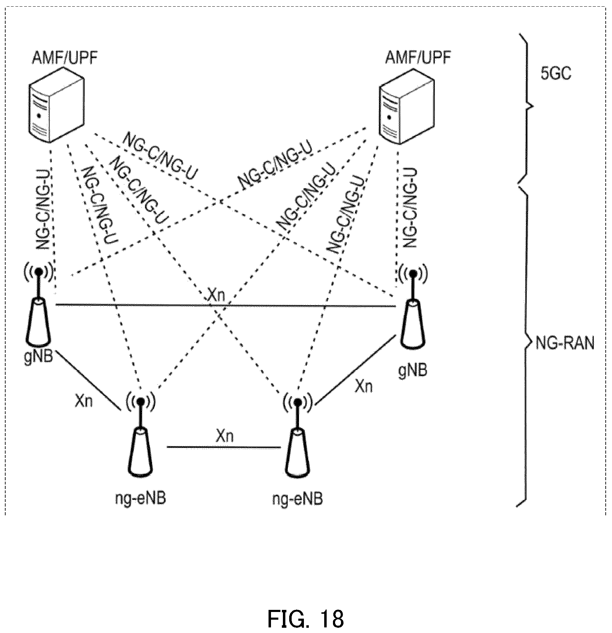

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 18 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the duration of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

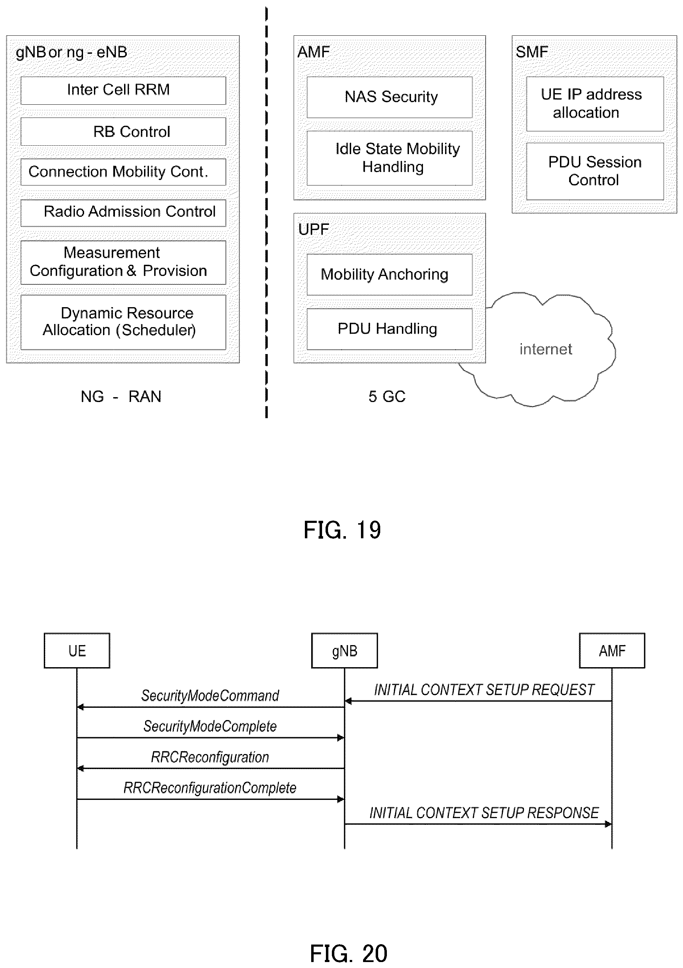

FIG. 19 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

FIG. 20 illustrates some interactions between a UE, gNB, and AMF (a 5GC Entity) performed in the context of a transition of the UE from RRC _IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL

### CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

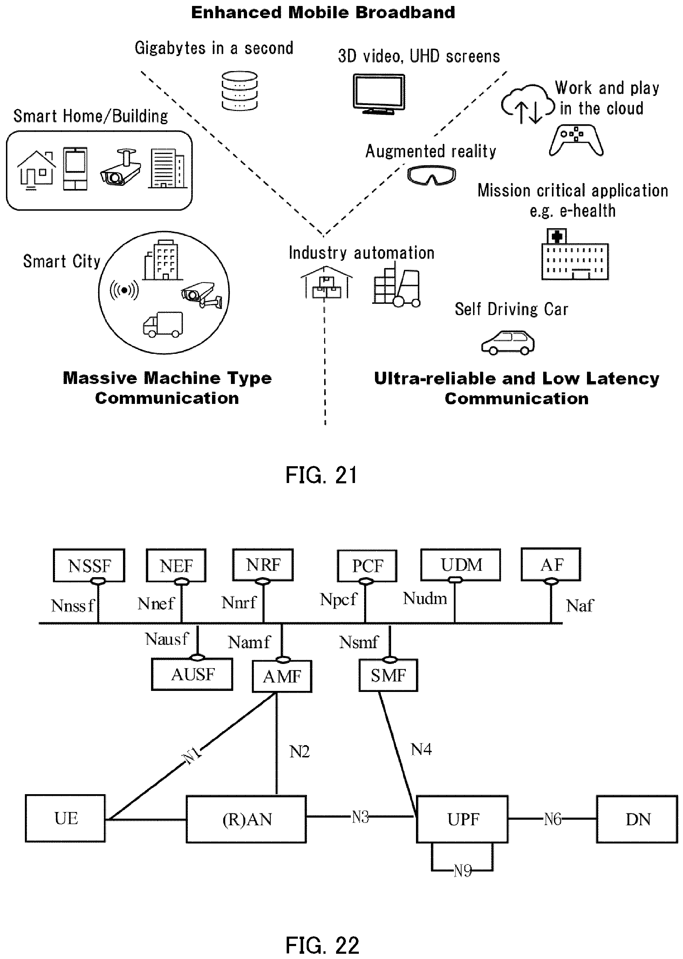

FIG. 21 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 21 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-latency sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 20. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 22 illustrates a 5G NR non-roaming reference architecture (see TS 23.501 v16.1.0, section 4.23). An Application Function (AF), e.g., an external application server hosting 5G services, exemplarily described in FIG. 21, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 22 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to an exemplary embodiment of the present disclosure includes: control circuitry, which, in operation, assigns, in terminal-to-terminal communication in an unlicensed band, a signal in a resource allocation unit configured with interlaces with consecutive numbers; and transmission circuitry, which, in operation, transmits the signal.

In an exemplary embodiment of the present disclosure, the resource allocation unit is a subchannel, and the number of the interlaces that composes each of a plurality of the subchannels is different.

In an exemplary embodiment of the present disclosure, the signal includes a control signal and a data signal to which resource allocation is indicated by the control signal, and in a case where the control signal is assigned to one or some of a plurality of resource blocks composing the resource allocation unit to which the data signal is assigned, the control circuitry assigns, in the same symbol, the data signal to a resource block different from a resource block to which the control signal is assigned, among the plurality of resource blocks, and configures, in the plurality of resource blocks, transmission power per resource block to be the same in the control signal and in the data signal.

In an exemplary embodiment of the present disclosure, the control circuitry maps a control signal included in the signal to a resource block with a smaller number among a plurality of resource blocks composing the resource allocation unit.

In an exemplary embodiment of the present disclosure, the resource allocation unit is a subchannel, and the control circuitry, in a case where the signal is assigned to a plurality of the subchannels, maps the control signal to a subchannel with a smaller number among the plurality of subchannels.

In an exemplary embodiment of the present disclosure, the control circuitry maps a control signal included in the signal to a resource block with a smaller number included in an interlace with a smaller number, among a plurality of resource blocks composing the resource allocation unit.

In an exemplary embodiment of the present disclosure, the control circuitry maps a control signal included in the signal to a resource block with a smaller number in a specified number of interlaces with smaller numbers among a plurality of interlaces included in the resource allocation unit.

In an exemplary embodiment of the present disclosure, the resource allocation unit is a subchannel, and when the number of subchannels configurable is C in a case where the number of time resource candidates for mapping of a control signal included in the signal is one in a slot, the number of subchannels configurable when the number of the time resource candidates in the slot is K is set to C/K.

A communication apparatus according to an exemplary embodiment of the present disclosure includes: reception circuitry, which, in operation, receives, in terminal-to-terminal communication in an unlicensed band, a signal assigned in a resource allocation unit configured with interlaces with consecutive numbers; and control circuitry, which, in operation, demodulates the signal.

A communication method according to an exemplary embodiment of the present disclosure includes: assigning, by a communication apparatus, in terminal-to-terminal communication in an unlicensed band, a signal in a resource allocation unit configured with interlaces with consecutive numbers; and transmitting the signal by the communication apparatus.

A communication method according to an exemplary embodiment of the present disclosure includes: receiving, by a communication apparatus, in terminal-to-terminal communication in an unlicensed band, a signal assigned in a resource allocation unit configured with interlaces with consecutive numbers; and demodulating the signal by the communication apparatus.

The disclosure of Japanese Patent Application No. 2022-128348, filed on August 10, 2022, including the specification, drawings and abstract, is incorporated herein by reference in its entirety.

### Industrial Applicability

An embodiment of the present disclosure is useful for radio communication systems.

### Reference Signs List

- 100: Base station
- 200: Terminal
- 201: Receiver
- 202: LBT carrier sensing processor
- 203: Signal separator
- 204: Demodulator
- 205: Error correction decoder
- 206: Control signal receiver
- 207: Error correction encoder
- 208: Modulator
- 209: Control signal generator
- 210: Signal assigner
- 211: Transmitter

## Claims

1. A communication apparatus, comprising:
control circuitry, which, in operation, assigns, in terminal-to-terminal communication in an unlicensed band, a signal in a resource allocation unit configured with interlaces with consecutive numbers; and
transmission circuitry, which, in operation, transmits the signal.

2. The communication apparatus according to claim 1, wherein:
the resource allocation unit is a subchannel, and
the number of the interlaces that composes each of a plurality of the subchannels is different.

3. The communication apparatus according to claim 1, wherein:
the signal includes a control signal and a data signal to which resource allocation is indicated by the control signal, and
in a case where the control signal is assigned to one or some of a plurality of resource blocks composing the resource allocation unit to which the data signal is assigned, the control circuitry assigns, in the same symbol, the data signal to a resource block different from a resource block to which the control signal is assigned, among the plurality of resource blocks, and configures, in the plurality of resource blocks, transmission power per resource block to be the same in the control signal and in the data signal.

4. The communication apparatus according to claim 1, wherein the control circuitry maps a control signal included in the signal to a resource block with a smaller number among a plurality of resource blocks composing the resource allocation unit.

5. The communication apparatus according to claim 4, wherein:
the resource allocation unit is a subchannel, and
the control circuitry, in a case where the signal is assigned to a plurality of the subchannels, maps the control signal to a subchannel with a smaller number among the plurality of subchannels.

6. The communication apparatus according to claim 1, wherein the control circuitry maps a control signal included in the signal to a resource block with a smaller number included in an interlace with a smaller number, among a plurality of resource blocks composing the resource allocation unit.

7. The communication apparatus according to claim 1, wherein the control circuitry maps a control signal included in the signal to a resource block with a smaller number in a specified number of interlaces with smaller numbers among a plurality of interlaces included in the resource allocation unit.

8. The communication apparatus according to claim 1, wherein:
the resource allocation unit is a subchannel, and
when the number of subchannels configurable is C in a case where the number of time resource candidates for mapping of a control signal included in the signal is one in a slot, the number of subchannels configurable when the number of the time resource candidates in the slot is K is set to C/K.

9. A communication apparatus, comprising:
reception circuitry, which, in operation, receives, in terminal-to-terminal communication in an unlicensed band, a signal assigned in a resource allocation unit configured with interlaces with consecutive numbers; and
control circuitry, which, in operation, demodulates the signal.

10. A communication method, comprising:
assigning, by a communication apparatus, in terminal-to-terminal communication in an unlicensed band, a signal in a resource allocation unit configured with interlaces with consecutive numbers; and
transmitting the signal by the communication apparatus.

11. A communication method, comprising:
receiving, by a communication apparatus, in terminal-to-terminal communication in an unlicensed band, a signal assigned in a resource allocation unit configured with interlaces with consecutive numbers; and
demodulating the signal by the communication apparatus.
